# EUROPEAN PATENT APPLICATION

(11) **EP 3 057 312 A2**
(43) Date of publication of application: **17.08.2016**
(21) Application number: 16150678.7
(22) Date of filing: 08.01.2016
(51) Int. Cl.: H04N 5/445, G06F 3/0482, G06F 3/0485, H04N 21/431, H04N 21/482

(54) **IMAGE DISPLAY APPARATUS AND METHOD**

(30) Priority: 10.02.2015 KR 20150020287
(71) Applicant: Samsung Electronics Co., Ltd., Gyeonggi-do 16677 (KR)
(72) Inventor: LEE, Jin-ha, Seoul (KR); MOON, Jong-bo, Gyeonggi-do (KR); PARK, Jun-seong, Gyeonggi-do, (KR)
(74) Representative: Appleyard Lees IP LLP

(57) **Abstract**

Disclosed is an image display apparatus (100) including a display unit (120) configured to display an item list including a plurality of items, a sensing unit (130) configured to sense a first input for zooming out on the item list or a second input for zooming in on the item list, and a control unit (110) configured to display the plurality of items with a decrease in size in response to the first input or display the plurality of items with an increase in size in response to the second input.

## Description

### CROSS-REFERENCE TO RELATED APPLICATION

This application claims the benefit of Korean Patent Application No. 10-2015-0020287, filed on February 10, 2015, in the Korean Intellectual Property Office, the disclosure of which is incorporated herein in its entirety by reference.

### BACKGROUND

### Field

The present disclosure relates to an image display apparatus and method, and more particularly, to an image display apparatus and method, in which an item list including a plurality of items may be zoomed in or out on.

### Description of the Related Art

An image display apparatus is an apparatus having a function of displaying an image that may be viewed by a user. A user may view broadcasting through an image display apparatus. An image display apparatus displays, on a display, broadcasting selected by a user from among broadcast signals transmitted by a broadcasting station. Globally, a current trend in broadcasting is a switch from analog broadcasting to digital broadcasting.

Digital broadcasting denotes broadcasting in which digital images and audio signals are transmitted. Digital broadcasting is more resistant to external noise than analog broadcasting, thereby having a low data loss, being advantageous for error correction, and providing a clear screen having high resolution. In addition, digital broadcasting enables bidirectional services, unlike analog broadcasting.

Recently, smart televisions are being provided to provide a variety of content in addition to a digital broadcasting function. Instead of being manually operated according to selection by users, smart televisions are meant to analyze and provide what users desire without manipulation from the users.

### SUMMARY

Provided are an image display apparatus and method in which an item list is zoomed in or out on or from, thus facilitating retrieval of an item from the item list or movement between a plurality of items in the item list.

According to the present invention there is provided an apparatus and method as set forth in the appended claims. Other features of the invention will be apparent from the dependent claims, and the description which follows. According to an aspect of an exemplary embodiment, an image display apparatus includes a display unit configured to display an item list including a plurality of items, a sensing unit configured to sense a first input for zooming out on the item list or a second input for zooming in on the item list, and a control unit configured to display the plurality of items with a decrease in size in response to the first input or display the plurality of items with an increase in size in response to the second input.

The first input may include at least one of an input of dragging in a first direction on a touch pad when the touch pad is included in a control apparatus for controlling the image display apparatus, an input of tilting a pointing device in a second direction when the control apparatus is the pointing device, and an input of pressing a direction key when the control apparatus includes four direction keys.

The second input may include at least one of an input of dragging in a third direction opposite to the first direction on the touch pad, an input of tilting the pointing device in a fourth direction opposite to the second direction, and an input of pressing an opposite direction key of the direction key among the four direction keys.

The control unit may display lower items (e.g. sub-items) included in at least one of the plurality of items in response to the first input.

The control unit may display an upper item region including the plurality of items and display lines corresponding to the plurality of items in the upper item region such that the lines are listed (e.g. displayed) in succession (e.g. adjacently), in response to the first input.

The sensing unit may sense the second input while the lines are displayed, and the control unit may change the lines into the plurality of items corresponding to the lines and display the changed items, in response to the second input.

The sensing unit may sense a user input of moving a bookmark item among the plurality of items in a direction toward a highlighted point, and the control unit may increase a moving speed of the bookmark item and move the bookmark item to the highlighted point when a distance between the bookmark item and the highlighted point is equal to or less than a predetermined distance.

The control unit may display detailed information about at least one of the plurality of items in response to the second input.

The control unit may display an upper item including the plurality of items in response to the second input.

When the sensed input is disengaged (e.g. released) while the plurality of items are displayed with a decrease or increase in size, the control unit may spring (e.g. revert, return, change) the plurality of items back to original states thereof.

When a flip input is sensed while the plurality of items are displayed with a decrease or increase in size, the control unit may maintain a state in which the plurality of items are displayed with a decrease or increase in size although the sensed input is disengaged.

The sensing unit may sense a third input for moving the item list, and the control unit may move the item list to change a highlighted item among the plurality of items in response to the third input.

The sensing unit may sense a third input for moving a highlight in the item list and move the highlight to change a highlighted item among the plurality of items in response to the third input.

The display unit may display a cursor indicating a position of a user input, and the control unit may move the cursor from a first point of the item list to a second point of the item list in response to the first input or the second input.

The control unit may highlight an item on which the cursor is positioned among the plurality of items.

According to an aspect of another exemplary embodiment, an image display method includes displaying an item list including a plurality of items on a display unit, sensing a first input for zooming out on the item list or a second input for zooming in on the item list, and displaying the plurality of items with a decrease in size in response to the first input or displaying the plurality of items with an increase in size in response to the second input.

The image display method may further include displaying lower items included in at least one of the plurality of items in response to the first input.

The image display method may further include displaying an upper item region including the plurality of items and displaying lines corresponding to the plurality of items in the upper item region such that the lines are listed in succession, in response to the first input.

The image display method may further include sensing the second input while the lines are displayed and changing the lines into the plurality of items corresponding to the lines and displaying the changed items, in response to the second input.

The image display method may further include setting at least one of the plurality of items as a bookmark item, sensing a user input of moving the bookmark item in a direction toward a highlighted point, and increasing a moving speed of the bookmark item and moving the bookmark item to the highlighted point when a distance between the bookmark item and the highlighted point is equal to or less than a predetermined distance.

The image display method may further include displaying detailed information about at least one of the plurality of items in response to the second input.

The image display method may further include displaying an upper item including the plurality of items in response to the second input.

The image display method may further include, when the sensed input is disengaged while the plurality of items are displayed with a decrease or increase in size, springing the plurality of items back to original states thereof.

The image display method may further include sensing a flip input while the plurality of items are displayed with a decrease or increase in size and maintaining a state in which the plurality of items are displayed with a decrease or increase in size although the sensed input is disengaged.

The image display method may further include sensing a third input for moving the item list and moving the item list to change a highlighted item among the plurality of items in response to the third input.

The image display method may further include sensing a third input for moving a highlight in the item list and moving the highlight to change a highlighted item among the plurality of items in response to the third input.

The image display method may further include displaying a cursor indicating a position of a user input on the display unit and moving the cursor from a first point of the item list to a second point of the item list in response to the first input or the second input.

The image display method may further include highlighting an item on which the cursor is positioned among the plurality of items.

According to an aspect of another exemplary embodiment, an image display system includes an image display apparatus and a control apparatus, as herein described.

### BRIEF DESCRIPTION OF THE DRAWINGS

For a better understanding of the invention, and to show how embodiments of the same may be carried into effect, reference will now be made, by way of example, to the accompanying diagrammatic drawings in which:
FIG. 1 is a diagram showing an image display apparatus and a control apparatus according to an exemplary embodiment;
FIG. 2 is a block diagram showing a configuration of an image display apparatus according to an exemplary embodiment;
FIG. 3 is a block diagram showing a configuration of an image display apparatus according to an exemplary embodiment;
FIG. 4 is a diagram for describing a software configuration stored in a storage unit 190 of FIG. 3;
FIG. 5 is a block diagram showing a configuration of a control apparatus according to an exemplary embodiment;
FIGS. 6A to 6D are views illustrating an example in which an item list is zoomed out on according to an exemplary embodiment;
FIGS. 7A to 7F are views illustrating an example in which an item list is zoomed out on and then zoomed in on according to an exemplary embodiment;
FIGS. 8A to 8D are views illustrating an example in which an item list is zoomed in on according to an exemplary embodiment;
FIGS. 9A and 9B are views illustrating an example in which an item list is zoomed in on according to an exemplary embodiment;
FIGS. 10A to 10G are views illustrating an example in which an item list is zoomed out on and then zoomed in on according to an exemplary embodiment;
FIGS. 11A to 11G are views illustrating an example in which an item list is zoomed out on and then zoomed in on according to an exemplary embodiment; and
FIG. 12 is a flowchart showing an image display method according to an exemplary embodiment.

### DETAILED DESCRIPTION

Reference will now be made in detail to exemplary embodiments, examples of which are illustrated in the accompanying drawings, wherein like reference numerals refer to like elements throughout. In this regard, the present exemplary embodiments may have different forms and should not be construed as being limited to the descriptions set forth herein. Accordingly, the exemplary embodiments are merely described below, by referring to the figures, to explain aspects. As used herein, the term "and/or" includes any and all combinations of one or more of the associated listed items. Expressions such as "at least one of," when preceding a list of elements, modify the entire list of elements and do not modify the individual elements of the list.

Terms used herein will be briefly described, and the exemplary embodiments will be described in detail.

Terms used in the exemplary embodiments have been selected as general terms which are widely used at present, in consideration of the functions of the exemplary embodiments, but may be altered according to the intent of an operator skilled in the art, conventional practice, or introduction of new technology. Also, if there is a term which is arbitrarily selected by the applicant in a specific case, in this case, a meaning of the term will be described in detail in a corresponding description portion of the exemplary embodiments. Therefore, the terms should be defined on the basis of the entire content of this specification instead of a simple name of each of the terms.

In this disclosure below, when it is described that one comprises (or includes or has) some elements, it should be understood that it may comprise (or include or have) only those elements, or it may comprise (or include or have) other elements as well as those elements if there is no specific limitation. Moreover, each of terms such as "unit" and "module" described in the specification denotes an element for performing at least one function or operation, and may be implemented in hardware, software or the combination of hardware and software.

Hereinafter, the exemplary embodiments will be described in detail to be easily embodied by those skilled in the art with reference to the accompanying drawings. The exemplary embodiments may, however, be embodied in many different forms and should not be construed as being limited to the exemplary embodiments set forth herein. In the accompanying drawings, portions irrelevant to a description of the exemplary embodiments will be omitted for clarity. Moreover, like reference numerals refer to like elements throughout.

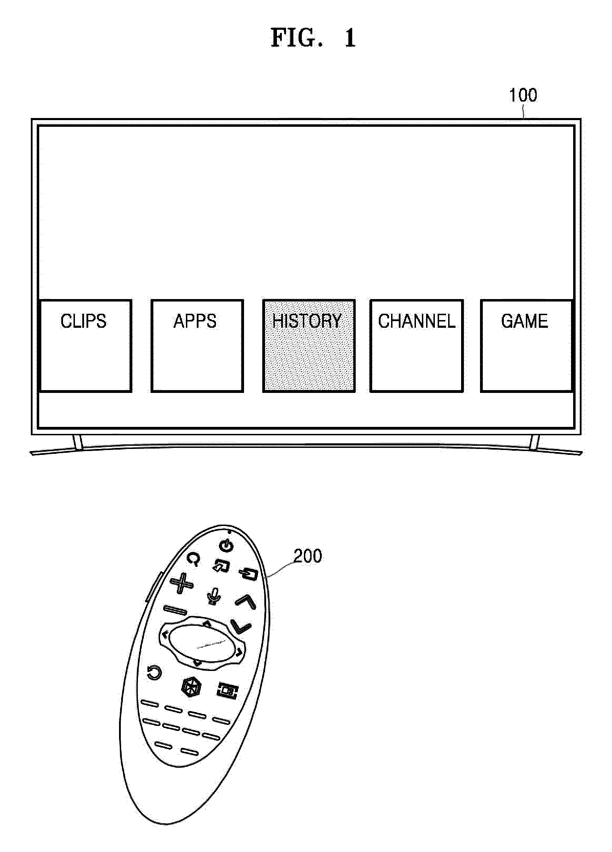

FIG. 1 is a diagram showing an image display apparatus 100 and a control apparatus 200 according to an exemplary embodiment.

As shown in FIG. 1, the image display apparatus 100 may be a TV, which is merely an example, and may be implemented as an electronic device including a display unit 120. For example, the image display apparatus 100 may be implemented as one of various electronic devices such as a smart phone, a tablet PC, a digital camera, a camcorder, a laptop computer, a desk top, an e-book terminal, a digital broadcasting terminal, a personal digital assistant (PDA), a portable multimedia player (PMP), a navigation device, an MP3 player, a wearable device, etc. In particular, exemplary embodiments may be easily implemented in a display device having a large display unit 120 such as a TV, but is not limited thereto. In addition, the image display apparatus 100 may be stationary or mobile and may be a digital broadcasting receiver capable of receiving digital broadcasting.

The image display apparatus 100 may be implemented as a curved display apparatus which may be a screen with a curvature or a flexible display apparatus having an adjustable curvature in addition to a flat display apparatus. An output resolution of the image display apparatus 100 may include, for example, high definition (HD), full HD, ultra HD, or a higher resolution.

The control apparatus 200 may be implemented as various types of apparatuses for controlling the image display apparatus 100 such as a remote control or cell phone.

In addition, the control apparatus 200 may control the image display apparatus 100 through short-range communication such as infrared (IR) or Bluetooth. The control apparatus 200 may control a function of the image display apparatus 100 using at least one of a key (including a button), a touchpad, a microphone (not shown) capable of receiving a user's voice, and a sensor (not shown) capable of recognizing a motion of the control apparatus 200.

The control apparatus 200 includes a power on/off button for powering the image display apparatus 100 on or off. The control apparatus 200 may also change a channel on, adjust the volume of, select a terrestrial broadcast/cable broadcast/satellite broadcast on, or set a configuration of the image display apparatus 100 according to a user input.

In addition, the control apparatus 200 may be a pointing device. For example, the control apparatus 200 may operate as a pointing device when a predetermined key input may be received.

The image display apparatus 100 may be controlled by a user input of moving the control apparatus 200 up, down, left, or right or tilting the control apparatus 200 in any direction. Information regarding movement of the control apparatus 200 that is sensed through a sensor of the control apparatus 200 may be transmitted to the image display apparatus 100. The image display apparatus 100 may calculate coordinates of the cursor on the display unit from the information regarding the movement of the control apparatus 200 and move the cursor in accordance with the calculated coordinates. Thus, a cursor on the display unit of the image display apparatus 100 may move or various displayed menus may be activated.

Alternatively, on a condition that the control apparatus 200 includes a touch pad, a cursor on the display unit of the image display apparatus 100 may be moved, or various displayed menus may be selectively activated according to a displacement of an object such as a user's finger that moves on the touch pad.

The term "user" used herein denotes a person who uses the control apparatus 200 to control a function or operation of the image display apparatus 100 and may include, for example, a viewer, a manager, or an installation engineer.

The image display apparatus 100 according to an exemplary embodiment may display an item list including a plurality of items on the display unit.

In addition, the image display apparatus 100 according to an exemplary embodiment may display the plurality of items included in the item list with an increase or decrease in size in response to an input for zooming out on the item list or an input for zooming in on the item list.

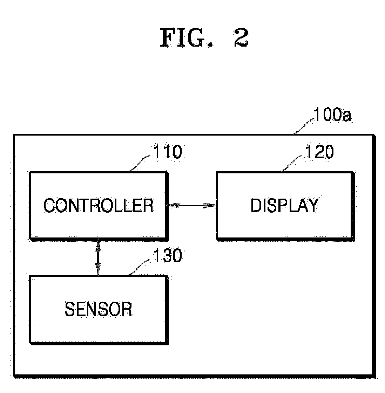

FIG. 2 is a block diagram showing a configuration of an image display apparatus according to an exemplary embodiment. An image display apparatus 100a of FIG. 2 may be an example of the image display apparatus 100 of FIG. 1.

Referring to FIG. 2, the image display apparatus 100a according to an exemplary embodiment may include a control unit (i.e. a controller) 110, a display unit (i.e. a display) 120, and a sensing unit (i.e. a sensor) 130.

The display unit 120 converts an image signal, a data signal, an on-screen display (OSD) signal, a control signal or the like, which may be processed by the control unit 110, into a driving signal. The display unit 120 may be implemented as a plasma display panel (PDP), a liquid crystal display (LCD), an organic light emitting diode (OLED), or a flexible display and may also be implemented as a three-dimensional (3D) display. In addition, the display unit 120 may be configured as a touch screen and thus used as an input device as well as an output device.

The display unit 120 according to an exemplary embodiment may display an item list including a plurality of items. In addition, the display unit 120 may display a cursor indicating a position of a user input on the display unit 120.

The sensing unit 130 according to an exemplary embodiment may sense the user input and deliver the sensed signal to the control unit 110. In addition, the sensing unit 130 may sense a user input, such as a power on/off, a channel selection, a channel up/down, or a screen setting, from the control apparatus 200. The sensing unit 130 according to an exemplary embodiment may sense a user input for moving the cursor displayed on the display unit 120. In addition, the sensing unit 130 according to an exemplary embodiment may sense an input for entering a pointing mode. For example, the sensing unit 130 may sense an input of touching a touch region of the control apparatus 200 or an input of pressing a predetermined button of the user input unit of the control apparatus 200.

In addition, the sensing unit 130 may sense a first input for zooming out on an item list or a second input for zooming in on the item list.

For example, the sensing unit 130 may sense, as the first input, at least one of an input of dragging in a first direction on a touch pad on a condition that the touch pad is included in the control apparatus 200 for controlling the image display apparatus 100, an input of tilting a pointing device in a second direction on a condition that the control apparatus 200 is the pointing device, and an input of pressing of a direction key on a condition that the control apparatus 200 includes four direction keys. Alternatively, the sensing unit 130 may sense, as a second input, at least one of an input of dragging in a third direction opposite to the first direction on the touch pad, an input of tilting the pointing device in a fourth direction opposite to the second direction, and an input of pressing an opposite direction key of the direction key among the four direction keys.

In addition, the sensing unit 130 may sense an input for moving an item list, an input for moving a highlight in the item list, and an input for moving a cursor.

The control unit 110 according to an exemplary embodiment may process an image signal and input the processed image signal to the display unit 120. Thus, an image corresponding to the image signal may be displayed on the display unit 120. In addition, the control unit 110 may control the image display apparatus 100a by a user command sensed through the sensing unit 130 or an internal program.

For example, according to an exemplary embodiment, the control unit 110 may display the plurality of items included in the item list with a decrease in size in response to the sensed first input (a user input for zooming out on the item list). In addition, the control unit 110 may display the plurality of items included in the item list with an increase in size in response to the sensed second input (a user input for zooming in on the item list).

The control unit 110 may display lower items included in at least one of the plurality of items in response to the first input.

The control unit 110 may display an upper item region including the plurality of items and display lines corresponding to the plurality of items in the upper item region such that the lines are listed in succession, in response to the first input.

The control unit 110 may change the lines to the plurality of items corresponding to the lines and display the changed items, in response to the second input.

When a user input of moving a bookmark item among the plurality of items in a direction toward a highlighted point is sensed, and a distance between the bookmark item and the highlighted point is equal to or less than a predetermined distance, the control unit 110 may increase a moving speed of the bookmark item and move the bookmark item to the highlighted point.

The control unit 110 may display detailed information about at least one of the plurality of items in response to the second input.

The control unit 110 may display an upper item including the plurality of items in response to the second input.

When the sensed input is disengaged while the plurality of items are displayed with a decrease or increase in size, the control unit 110 may spring the plurality of items back to their original states.

When a flip (i.e. a flick) input is sensed while the plurality of items are displayed with a decrease or increase in size, the control unit 110 may maintain a state in which the plurality of items are displayed with a decrease or increase in size although the sensed input is disengaged.

The control unit 110 may move the item list to change a highlighted item among the plurality of items in response to a user input for moving the item list.

The control unit 110 may move the highlight to change the highlighted item among the plurality of items in response to a user input for moving the highlight in the item list.

The control unit 110 may move a cursor from a first point in the item list to a second point in the item list in accordance with the first input or second input. The control unit 110 may highlight an item on which the cursor is positioned.

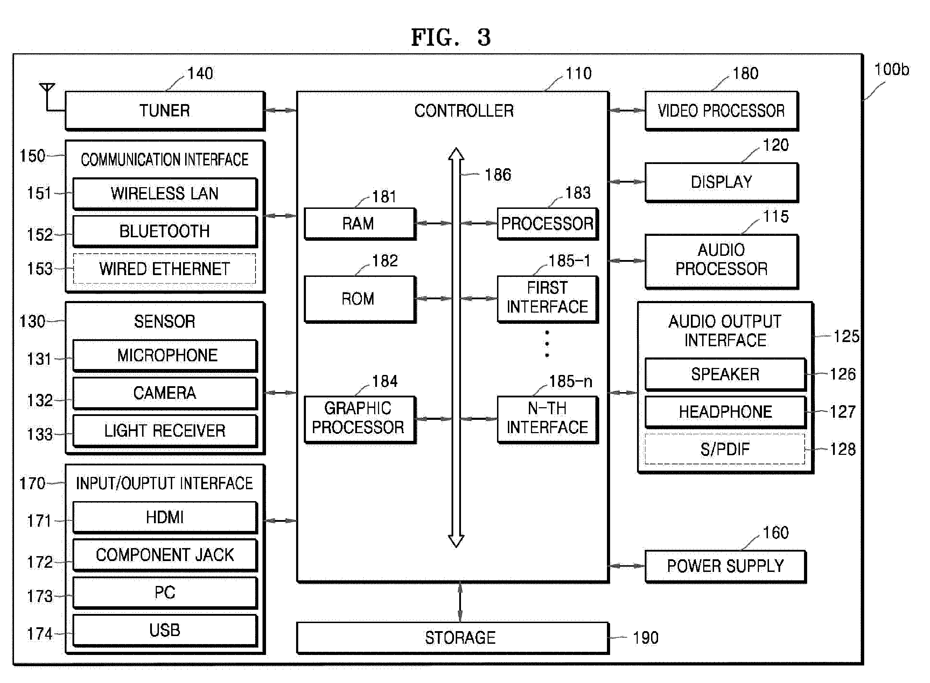

FIG. 3 is a block diagram showing a configuration of an image display apparatus according to an exemplary embodiment. An image display apparatus 100b of FIG. 3 may be an example of the image display apparatus 100 of FIG. 1.

Referring to FIG. 3, the image display apparatus 100b according to an exemplary embodiment may further include a video processing unit (i.e. a video processor) 180, an audio processing unit (i.e. an audio processor) 115, an audio output unit (i.e. an audio output interface) 125, a power unit (i.e. a power supply) 160, a tuner unit (i.e. a tuner) 140, a communication unit (i.e. a communication interface) 150, an input/output unit (i.e. an input/output interface) 170, and a storage unit (i.e. a storage) 190 in addition to the control unit 110, the display unit 120, and the sensing unit 130.

In the description of FIG. 3, repetitive description on the control unit 110, the display unit 120, and the sensing unit 130 described in FIG. 2 will be omitted.

The video processing unit 180 may processe video data received by the image display apparatus 100b. The video processing unit 180 may perform various image processing operations, such as decoding, scaling, noise filtering, frame rate conversion, and resolution conversion, on the video data.

The display unit 120 may display a video included in a broadcast signal received through the tuner unit 140 by control of the control unit 110. In addition, the display unit 120 may display content (e.g., a video) that may be input through the communication unit 150 or the input/output unit 170. The display unit 120 may output an image stored in the storage unit 190 by control of the control unit 110. In addition, the display unit 120 may display a voice user interface (UI) (e.g., including a voice command guide) for performing a voice recognition task corresponding to voice recognition or a motion UI (e.g., including a user motion guide for motion recognition) for performing a motion recognition task corresponding to motion recognition.

The audio processing unit 115 may processe audio data. The audio processing unit 115 may perform various processing operations, such as decoding, amplification, and noise filtering, on the audio data. The audio processing unit 115 may include a plurality of audio processing modules to process audios corresponding to a plurality of pieces of content.

The audio output unit 125 may output an audio included in a broadcast signal received through the tuner unit 140 by control of the control unit 110. The audio output unit 125 may output an audio (e.g., a voice or sound) that may be input through the communication unit 150 or the input/output unit 170. In addition, the audio output unit 125 may output an audio stored in the storage unit 190 by control of the control unit 110. The audio output unit 125 may include at least one of a speaker 126, a headphone output terminal 127, and a Sony/Philips digital interface (S/PDIF) output terminal 128. The audio output unit 125 may include a combination of the speaker 126, the headphone output terminal 127, and the S/PDIF output terminal 128.

The power unit 160 may supply power that is input from an external power source to elements inside the image display apparatus 100b by control of the control unit 110. In addition, the power unit 160 may supply the internal elements with power that may be output from one or more batteries (not shown) positioned inside the image display apparatus 100b by control of the control unit 110.

The tuner unit 140 may conduct amplification, mixing, or resonance on a broadcast signal received by cable or wirelessly in order to tune and select only a frequency of a channel to be received by the display apparatus 100 among many radio wave components. The broadcast signal includes an audio, a video, and additional information (e.g., an electronic program guide (EPG)).

The tuner unit 140 may receive a broadcast signal in a frequency band corresponding to a channel number (e.g., cable broadcasting No. 506) in response to a user input (e.g., a control signal including a channel number input, a channel up/down input, and a channel input on an EPG screen, which may be received from the control apparatus 200).

The tuner unit 140 may receive a broadcast signal from various sources, such as terrestrial broadcasting, cable broadcasting, satellite broadcasting, and Internet broadcasting. The tuner unit 140 may also receive a broadcast signal from a source such as analog broadcasting or digital broadcasting. The broadcast signal received through the tuner unit 140 may be decoded (e.g., audio-decoded, video-decoded, or additional-information-decoded) into an audio, a video, and/or additional information. The decoded audio, video, and/or additional information may be stored in the storage unit 190 by control of the control unit 110.

The tuner unit 140 of the image display apparatus 100b may be provided in a plurality. The tuner unit 140 may be implemented in one body with the image display apparatus 100b or may implemented as a separate device (e.g., a set-top box (not shown), a tuner unit (not shown) connected to the input/output unit 170, etc.) having a tuner unit, which may be connected (e.g. electrically connected) with the image display apparatus 100b.

The communication unit 150 may connect the image display apparatus 100b with an external device (e.g., an audio device) by control of the control unit 110. The control unit 110 may control the communication unit 150 to transmit/receive content to/from the external device connected through the communication unit 150, download an application from the external device, or perform web browsing. The communication unit 150 may include one of a wireless LAN (WLAN) 151, Bluetooth 152, and wired Ethernet 153 in accordance with the performance and structure of the display apparatus 100. In addition, the communication unit 150 may include a combination of the WLAN 151, Bluetooth 152, and wired Ethernet 153. The communication unit 150 may receive a control signal of the control apparatus 200 by control of the control unit 110. The control signal may be implemented as a Bluetooth type signal, RF type signal, or WiFi type signal.

For example, the communication unit 150 may receive a signal corresponding to a Bluetooth type user input (e.g., a touch, press, touch gesture, voice, or motion) from the control apparatus 200 through communication using the Bluetooth 152. The communication unit 150 may further include short-range communication (e.g., near field communication (NFC) (not shown) and Bluetooth low energy (BLE) (not shown)) other than the Bluetooth.

The sensing unit 130 may sense a user's voice, image, or interaction, for example.

A microphone 131 may receive a voice uttered by a user. The microphone 131 may convert the received voice into an electrical signal and output the electrical signal to the control unit 110. The user's voice may include, for example, a voice corresponding to a menu or function of the image display apparatus 100b. A recognition range of the microphone 131 may be recommended as a distance of 4 meters or less from the microphone 131 to the user's position and may vary depending on a level of the user's voice and surrounding environments (e.g., a speaker sound or ambient noise).

According to an exemplary embodiment, the microphone 131 may receive the voice uttered by the user and output the received voice data to the control unit 110 such that the control unit 110 may use the voice data to identify an identity of the user who views the image display apparatus 100b.

The microphone 131 may be implemented in one body with or separately from the image display apparatus 100b. The separate microphone 131 may be electrically connected with the image display apparatus 100b through the communication unit 150 or input/output unit 170.

It will be readily understood by those skilled in the art that the microphone 131 may be excluded according to the performance and structure of the image display apparatus 100b.

A camera unit 132 may receive an image (e.g., consecutive frames) corresponding to the user's motion including a gesture in a camera recognition range. For example, the recognition range of the camera unit 132 may be within a distance of about 0.1 meters to about 5 meters from the camera unit to the user. For example, the user's motion may include a body part of a user, such as the face, hand, fist, or finger of the user, or a motion of the body part of the user. The camera unit 132 may convert the received image into an electrical signal and output the electrical signal to the control unit 110 by control of the control unit 110.

According to an exemplary embodiment, the camera unit 132 may capture the face of the user and output the captured face image to the control unit 110 such that the control unit 110 may use the face image to identify an identity of the user who views the image display apparatus 100b.

The control unit 110 may use the received motion recognition result to select a menu displayed on the image display apparatus 100b or perform control corresponding to the motion recognition result. For example, the control may include channel adjustment, volume adjustment, indicator movement, and cursor movement.

The camera unit 132 may include a lens (not shown) and an image sensor (not shown). The camera unit 132 may use a plurality of lenses and image processing to support optical zoom or digital zoom. The recognition range of the camera unit 132 may be set variously depending on a camera angle and an ambient environment condition. When the camera unit 132 includes a plurality of cameras, the camera unit 132 uses the plurality of cameras to receive a three-dimensional (3D) still image or 3D moving image.

The camera unit 132 may be implemented in one body with or separately from the image display apparatus 100b. A separate device (not shown) including the separate camera unit 132 may be electrically connected with the image display apparatus 100b through the communication unit 150 or input/output unit 170.

It will be readily understood by those skilled in the art that the camera unit 132 may be excluded according to the performance and structure of the image display apparatus 100b.

A light receiving unit 133 may receive an optical signal (including a control signal) received from the external control apparatus 200 through an optical window (not shown) of a bezel of the display unit 120. The light receiving unit 133 may receive an optical signal corresponding to a user input (e.g., a touch, press, touch gesture, voice, or motion) from the control apparatus 200. The control signal may be extracted from the received optical signal by control of the control unit 110.

The input/output unit 170 may receive a video (e.g., a moving picture), an audio (e.g., a voice or music), and additional information (e.g., EPG) from the outside of the image display apparatus 100b by control of the control unit 110. The input/output unit 170 may include one of a high-definition multimedia interface (HDMI) port 171, a component jack 172, a PC port 173, and a USB port 174. The input/output unit 170 may include a combination of the HDMI port 171, the component jack 172, the PC port 173, and the USB port 174.

It will be readily understood by those skilled in the art that the configuration and operation of the input/output unit 170 may be implemented in various ways according to an exemplary embodiment of the present invention.

The control unit 110 may function to control an overall operation of the image display apparatus 100b and a signal flow between the internal elements of the image display apparatus 100b and to process data. When there is a user's input, or a predetermined and stored condition is satisfied, the control unit 110 may execute an operating system (OS) and various applications that are stored in the storage unit 190.

The control unit 110 may include a random access memory (RAM) 181 that stores a signal or data received from the outside of the image display apparatus 100b or may be used as storage regions corresponding to various tasks performed by the image display apparatus 100b, a read only memory (ROM) 182 that stores a control program for controlling the image display apparatus 100b, and a processor 183.

The processor 183 may include a graphic processing unit (GPU) (not shown) for performing graphical processing corresponding to a video. The processor 183 may be implemented as a system-on-chip (SoC) including a core (not shown) and the GPU (not shown). The processor 183 may include a single core, a dual core, a triple core, a quad core, and a core which is a multiple thereof.

In addition, the processor 183 may include a plurality of processors. For example, the processor 183 may be implemented as a main processor (not shown) and a sub processor (not shown) that operates in a sleep mode.

A graphic processing unit 184 may use a calculation unit (not shown) and a rendering unit (not shown) to generate a screen including various objects such as an icon, image, text, or the like. The calculation unit uses the user input sensed through the sensing unit 130 to calculate attribute values, such as coordinates, forms, sizes, and colors in which the objects are to be displayed according to the layout of the screen. The rendering unit generates a screen having various layouts including the objects on the basis of the attribute values calculated by the calculation unit. The screen generated by the rendering unit may be displayed within a display region of the display unit 120.

First to nth interfaces 185-1 to 185-n may be connected with the above-described various types of elements. One of the interfaces may be a network interface connected with an external device through a network.

The RAM 181, the ROM 182, the processor 183, the graphic processing unit 184, and/or the first to nth interfaces 185-1 to 185-n may be interconnected through an internal bus 186.

The term "control unit of image display apparatus" used herein includes the processor 183, the ROM 182, and the RAM 181.

The storage unit 190 may store various types of data, programs, or applications for driving and controlling the image display apparatus 100b by control of the control unit 110. The storage unit 190 may store input/output signals or data corresponding to the driving of the video processing unit 180, the display unit 120, the audio processing unit 115, the audio output unit 125, the power unit 160, the tuner unit 140, the communication unit 150, the sensing unit 130, and the input/output unit 170. The storage unit 190 may store control programs for controlling the image display apparatus 100b and the control unit 110, an application initially provided by a manufacturer or downloaded from the outside, a graphical user interface (GUI) associated with the application, an object (e.g., an image text, icon, or button) for providing the GUI, user information, documents, databases, or relevant data.

In an exemplary embodiment, the term "storage unit" includes the storage unit 190, the ROM 182 or RAM 181 of the control unit 110, or a memory card (e.g., a micro SD card or USB memory) (not shown) mounted in the image display apparatus 100b. In addition, the storage unit 190 may include a nonvolatile memory, a volatile memory, a hard disk drive (HDD), and a solid state drive (SSD).

Although not shown, the storage unit 190 may include a broadcast receiving module, a channel control module, a volume control module, a communication control module, a voice recognition module, a motion recognition module, a light receiving module, a display control module, an audio control module, an external input control module, a power control module, a power control module of an external device that may be wirelessly connected (e.g., via Bluetooth), a voice database (DB), or a motion DB. The modules and DBs, which are not shown, of the storage unit 190 may be implemented in the form of software for the image display apparatus 100b to perform a broadcast reception control function, a channel control function, a volume control function, a communication control function, a voice recognition function, a motion recognition function, a light reception control function, a display control function, an audio control function, an external input control function, a power control function, or a power control function of an external device wirelessly connected (e.g., via Bluetooth). The control unit 110 may perform each function using the software stored in the storage unit 190.

In addition, the image display apparatus 100b having the display unit 120 may be connected (e.g. electrically connected) with a separate external device (e.g., a set-top box) (not shown) having a tuner unit. For example, it will be readily understood by those skilled in the art that the image display apparatus 100b may be implemented as an analog TV, a digital TV, a 3D TV, a smart TV, an LED TV, an OLED TV, a plasma TV, or a monitor, but is not limited thereto.

The image display apparatus 100b may include a sensor (e.g., an illumination sensor, a temperature sensor, etc.) (not shown) that detects an internal or external state of the image display apparatus 100b.

The block diagram of the image display apparatus 100a or 100b shown in FIG. 2 or 3 is a block diagram for one exemplary embodiment. Elements of the block diagram may be integrated, added, or omitted according to a specification of the image display apparatus 100 that is actually implemented. That is, as necessary, two or more elements may be combined into one element, or one element may be divided into two or more elements. In addition, a function performed in each block is intended to describe exemplary embodiments, and its detailed operations or devices do not limit the scope of the present invention.

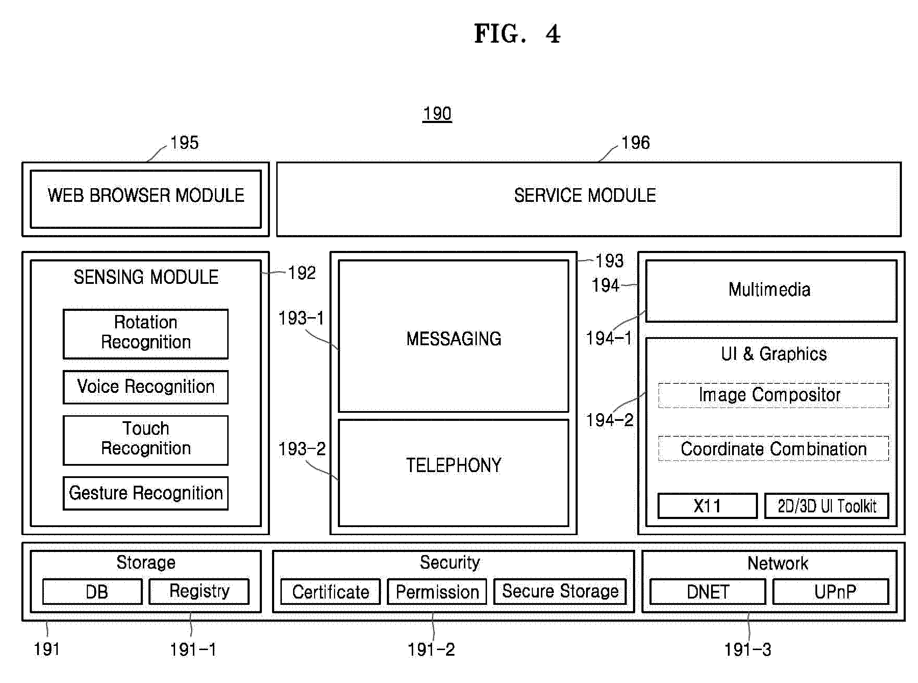

FIG. 4 is a diagram for describing a software configuration stored in a storage unit 190 of FIG. 3.

Referring to FIG. 4, software including a base module 191, a sensing module 192, a communication module 193, a presentation module 194, a web browser module 195, and a service module 196 may be stored in the storage unit 190.

The base module 191 may denote a basic module that processes a signal delivered from hardware included in the image display apparatus 100 and delivers the delivered signal to an upper layer module. The base module 191 includes a storage module 191-1, a security module 191-2, and a network module 191-3. The storage module 191-1 may be a program module that manages databases (DBs) or registries. The processor 183 may use the storage module 191-1 to access a database in the storage unit 190 and read various types of data. The security module 191-2 may be a program module that supports certification, request permission, and secure storage of hardware. The network module 191-3 includes a DNET module, an UPnP module, and so on as a module for supporting network connection.

The sensing module 192 may be a module that collects information from various types of sensors and analyzes and manages the collected information. The sensing module 192 may also include a head direction recognition module, a face recognition module, a voice recognition module, a motion recognition module, an NFC recognition module, and so on.

The communication module 193 may be a module for performing communication with the outside. The communication module 193 may include a messaging module 193-1 such as a messenger program, a short message service (SMS) & multimedia message service (MMS) program, or an email program and a telephony module 193-2 including a call information aggregator program module, a voice over Internet protocol (VoIP) module, and so on.

The presentation module 194 may be a module for configuring a display screen. The presentation module 194 includes a multimedia module 194-1 for replaying and outputting multimedia content and a UI rendering module 194-2 for performing user interfacing and graphic processing. The multimedia module 194-1 may include a player module, a camcorder module, a sound processing module, etc. Thus, the multimedia module 194-1 performs an operation of replaying various types of multimedia content to generate and replay a screen and a sound. The UI rendering module 194-2 may include an image compositor that combines images, a coordinate combination module that combines and generates coordinates of images to be displayed on the screen, an X11 module that receives various types of event from hardware, and a 2D/3D UI toolkit that provides a tool for configuring a 2D or 3D type Ul.

The web browser module 195 may denote a module that performs web browsing to access a web server. The web browser module 195 may include various modules such as a web view module that configures a web page, a download agent module that performs downloading, a bookmark module, and a webkit module.

The service module 196 may be a module including various types of applications for providing various services. In detail, the service module 196 may include various program modules such as an SNS program, a content replay program, a game program, an e-book program, a calendar program, a morning call management program, and other widgets.

In FIG. 4, various program modules are shown. However, it will be appreciated that the various program modules may be partially omitted, modified, or added according to the type and characteristic of the image display apparatus 100. For example, a location based module that supports a location based service in cooperation with hardware such as a Global Positioning System (GPS) chip may be further included.

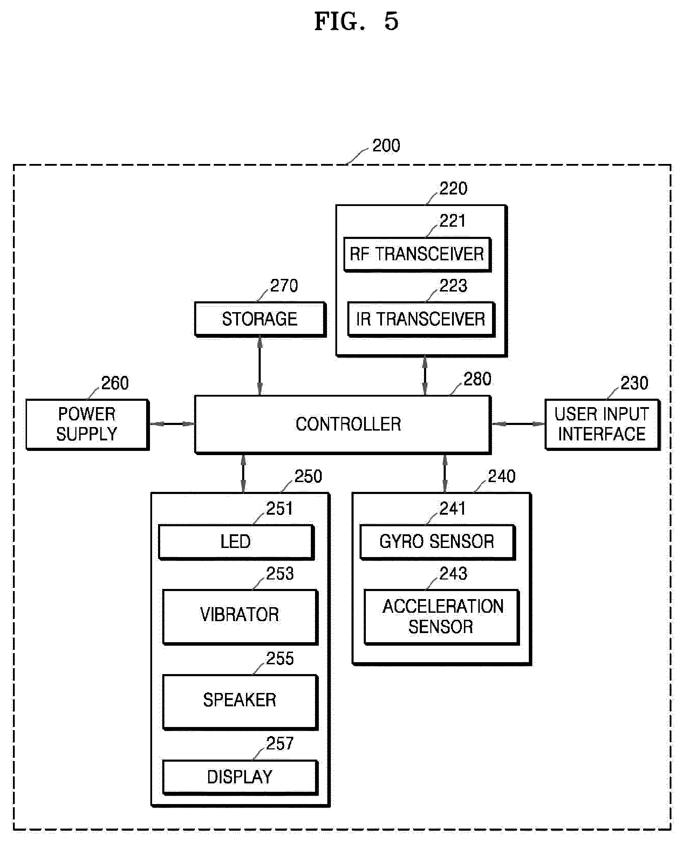

FIG. 5 is a block diagram showing a configuration of a control apparatus according to an exemplary embodiment.

Referring to FIG. 5, the control apparatus 200 may include a wireless communication unit 220, a user input unit 230, a sensor unit 240, an output unit 250, a power supply unit 260, a storage unit 270, and a control unit 280.

The wireless communication unit 220 may transmit/receive signals to/from any one of the above-described image display apparatuses according to exemplary embodiments. The wireless communication unit 220 may include an RF module 221 that may transmit and/or receive signals to and/or from the image display apparatus 100 according to an RF communication standard. In addition, the control apparatus 200 may include an IR module 223 that may transmit and/or receive signals to and/or from the image display apparatus 100 according to an IR communication standard.

In this exemplary embodiment, the control apparatus 200 transmits a signal containing information regarding movement of the control apparatus to the image display apparatus 100 through the RF module 221.

In addition, the control apparatus 200 may receive a signal transmitted by the image display apparatus 100 through the RF module 221. The control apparatus 200 may transmit a command for power on/off, channel change, volume adjustment, or the like to the image display apparatus 100 through the IR module 223 as necessary.

The user input unit 230 may include a keypad, a button, a touch pad, or a touch screen. A user may manipulate the user input unit 230 to input a command associated with the image display apparatus 100 to the control apparatus 200. When the user input unit 230 includes a hard key button, the user may input a command associated with the image display apparatus 100 to the control apparatus 200 through an operation of pushing the hard key button. When the user input unit 230 includes a touch screen, the user may touch a soft key of the touch screen to input a command associated with the image display apparatus 100 to the control apparatus 200.

For example, the user input unit 230 may include four direction buttons or keys. The four direction buttons or keys may be used to control a window, region, application, or item that may be displayed on the display unit 120. The four direction keys or buttons may be used to indicate up, down, left, and right movements. It will be understood by those skilled in the art that the user input unit 230 may include two direction keys or buttons, instead of the four direction keys or buttons.

In addition, the user input unit 230 may include various types of input units, such as a scroll key or a jog key, which may be manipulated by the user.

The user input unit 230 may include a touch pad. The user input unit 230 according to an exemplary embodiment may receive a user input such as a drag, touch, or flip through the touch pad of the control apparatus 200. The image display apparatus 100 may be controlled according to the type of the received user input (e.g., a direction in which a drag command is input, or a period in which a touch command is input).

The sensor unit 240 may include a gyro sensor 241 or acceleration sensor 243. The gyro sensor 241 may sense information regarding movement of the control apparatus 200. As an example, the gyro sensor 241 may sense information regarding an operation of the control apparatus 200 with respect to x, y, and z axes. The acceleration sensor 243 may sense information regarding a moving speed of the control apparatus 200. The sensor unit may further include a distance measuring sensor and thus may sense a distance from the image display apparatus 100.

The output unit 250 may output a video or voice signal corresponding to manipulation of the user input unit 230 or corresponding to a signal received from the image display apparatus 100. Through the output unit 250, the user may determine whether to adjust the user input unit 230 or whether to control the image display apparatus 100.

As an example, the output unit 250 may include an LED module (i.e. an LED) 251, a vibration module (i.e. a vibrator) 253, a sound output module (i.e. a speaker) 255, and/or a display module (i.e. a display) 257. When the user input unit 230 is manipulated, or signals are transmitted to and/or received from the image display apparatus 100 through the wireless communication unit 220, the LED module 251 may be lit up, the vibration module 253 may generate vibration, the sound output module 255 may output a sound, and/or the display module 257 may output an image.

The power supply unit 260 may supply power to the control apparatus 200. When the control apparatus 200 has not moved for a period of time, the power supply unit 260 may stop supplying power, thus reducing power dissipation. The power supply unit 260 may resume the power supply when a predetermined key included in the control apparatus 200 is manipulated.

The storage unit 270 may store various types of programs and application data needed in the control or operation of the control apparatus 200.

The control unit 280 may control an overall operation associated with the control of the control apparatus 200. The control unit 280 may transmit a signal corresponding to manipulation of a predetermined key of the user input unit 230 or a signal corresponding to movement of the control apparatus 200 sensed by the sensor unit 240 to the image display apparatus 100 through the wireless communication unit 220.

The image display apparatus 100 may include a coordinate calculation unit (not shown) that may calculate coordinates of the cursor corresponding to the operation of the control apparatus 200.

The coordinate calculation unit (not shown) may correct a hand tremble or error from a signal corresponding to a sensed operation of the control apparatus 200 to calculate coordinates (x, y) of the cursor to be displayed on the display unit 120.

In addition, a transmission signal of the control apparatus 200 that is sensed through the sensing unit 130 may be transmitted to the control unit 110 of the image display apparatus 100. The control unit 110 may determine information regarding the operation and key manipulation of the control apparatus 200 on the basis of the signal transmitted by the control apparatus 200 and may control the image display apparatus 100 according to a result of the determination.

As another example, the control apparatus 200 may calculate coordinates of the cursor corresponding to the operation and transmit the calculated coordinates to the image display apparatus 100. In this case, the image display apparatus 100 may transmit information regarding the coordinates of the cursor, which may be received without a separate operation of correcting a hand tremble or error, to the control unit 110.

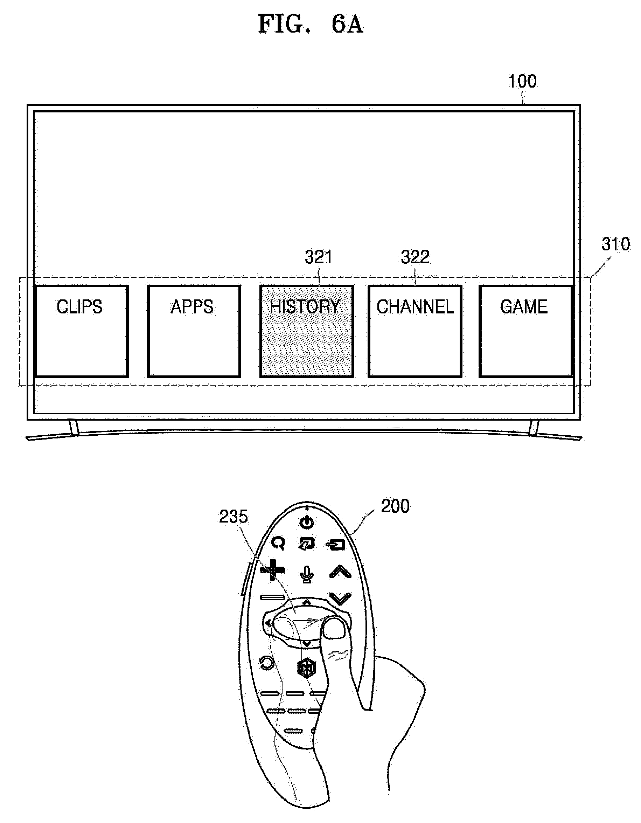

FIGS. 6A to 6D are views illustrating an example in which an item list is zoomed out on according to an exemplary embodiment.

Referring to FIG. 6A, a display unit 120 may display an item list 310 including a plurality of items at the bottom of the display unit 120. The item list 310 may have a form in which a plurality of items (e.g. graphical user interface items) are arranged in a transverse direction (e.g. horizontally, in a row). However, exemplary embodiments of the present invention are not limited thereto. The item list may be a list in which the plurality of items are arranged in a longitudinal direction (e.g. vertically, in a column/list).

The plurality of items may each be a category item indicating a category. For example, as shown in FIG. 6A, the plurality of items may include category item "CHANNEL," category item "HISTORY," category item "GAME," and category item "APPS." However, exemplary embodiments of the present invention are not limited thereto.

In addition, each category item may include, as lower items, items indicating content classified into a corresponding category. For example, category item "CHANNEL" may include items indicating broadcast channels (e.g., an item corresponding to a first channel, an item corresponding to a second channel, an item corresponding to a third channel, etc.) as lower items.

In addition, category item "HISTORY" may include, as lower items, items corresponding to an application that a user has recently executed. In addition, category item "GAME" may include, as lower items, items indicating game content. In addition, category item "APPS" may include, as lower items, items corresponding to an application installed in the image display apparatus.

As shown in FIG. 6A, the plurality of items included in the item list 310 may be represented as quadrangles, which may have the same size or different sizes. For example, the quadrangles may have different widths or heights depending on the number and characteristics of lower items included in each of the plurality of items. In addition, the quadrangles may include squares in which the height is the same as the width or rectangles in which the height is different from the width. However, exemplary embodiments of the present invention are not limited thereto.

Referring again to FIG. 6A, an item 321 positioned at or proximal the center of the display unit 120 among the plurality of items may be highlighted, and the highlighted item may be visibly displayed. For example, the color of the highlighted item may be changed, or a quadrangular box may be further displayed around the border of the item. Alternatively, the size (e.g., width or height) of the highlighted item may be changed.

Upon sensing a user input of moving the item list 310, the image display apparatus 100 may move the item list to change the item positioned at or proximal the center of the display unit 120 in accordance with a direction of the user input.

For example, as shown in FIG. 6A, when the item list 310 is a list in which items are transversely arranged, the image display apparatus 100 may sense an input of moving the item list 310 left or right and thus change the item positioned at or proximal the center of the display unit 120.

On a condition that the control apparatus 200 includes a touch pad 235, the control apparatus 200 may sense a touch input of dragging left or right on the touch pad 235. Alternatively, on a condition that the control apparatus 200 is a pointing device, the control apparatus 200 may sense a movement or tilt to the left or right using a motion sensor (e.g., an acceleration sensor or a gyro sensor). Alternatively, on a condition that the control apparatus 200 includes four direction keys, the control apparatus 200 may sense a left-key or right-key input among the four direction keys.

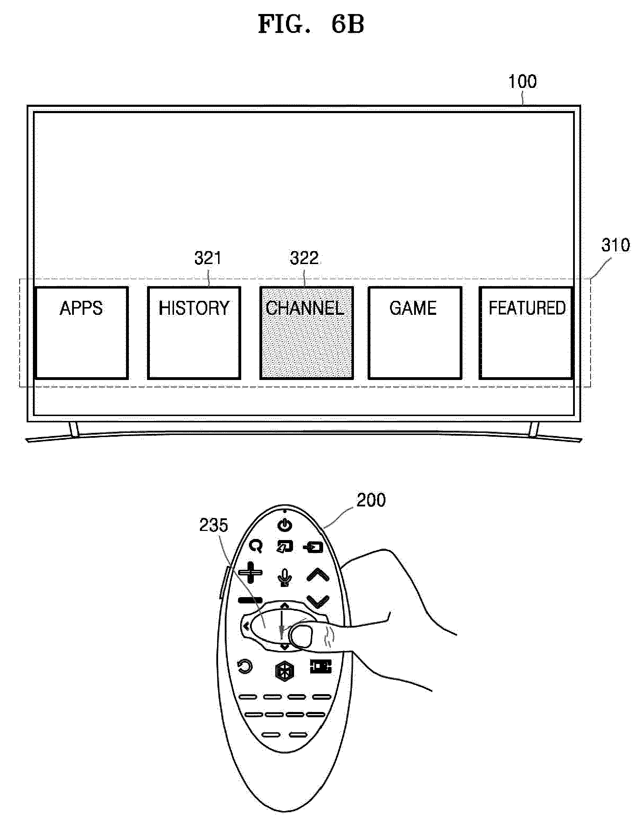

As shown in FIG. 6A, when a touch input of dragging right on the touch pad 235 is sensed, the image display apparatus 100 may move the item list 310 left, i.e., in a direction opposite to the right. When the item list 310 is moved left, as shown in FIG. 6B, a second item 322 having been positioned at a right side of the first item 321 is moved to the center of the display unit 120 and then highlighted.

The image display apparatus 100 may sense a user input of zooming out on the item list. For example, on a condition that the control apparatus 200 includes the touch pad 235, the control apparatus 200 may sense a touch input of dragging in a direction corresponding to the zoom-out on the touch pad 235. Alternatively, on a condition that the control apparatus 200 is the pointing device, the image display apparatus 100 may sense a user input of moving or tilting the control apparatus 200 in a direction corresponding to the zoom-out. Alternatively, on a condition that the control apparatus 200 includes four direction keys, the image display apparatus 100 may sense an input of pressing a direction key corresponding to the zoom-out among the four direction keys.

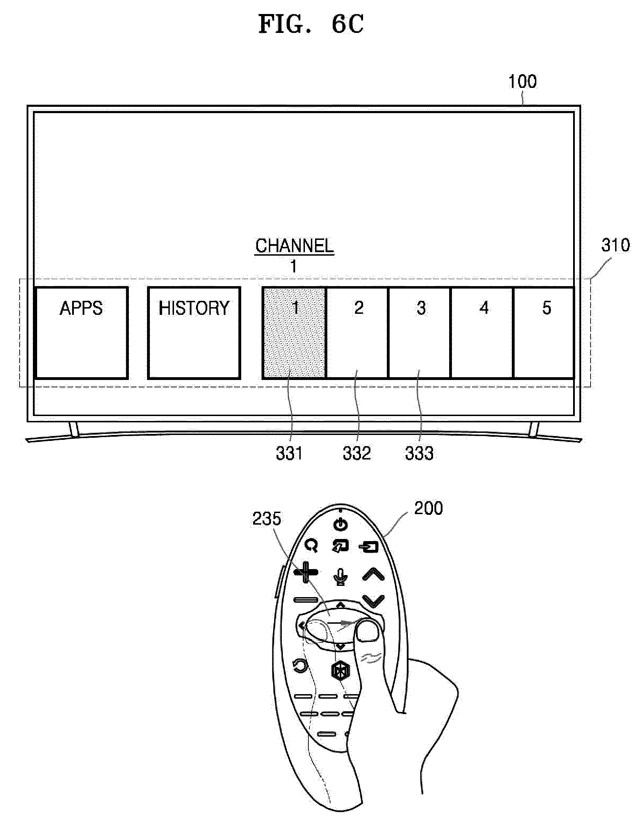

As shown in FIG. 6B, when a touch input of dragging down on the touch pad 235 (e.g., a user input for the zoom-out) is sensed, as shown in FIG. 6C, the image display apparatus 100 may display lower items included in the highlighted item in the item list 310.

For example, when a user input of zooming out on the item list 310 (e.g., a touch input of dragging down on the touch pad) while category item "CHANNEL" 322 is highlighted, as shown in FIG. 6C, the image display apparatus 100 may display items indicating broadcast channels included in category item "CHANNEL" 322 (e.g., an item 331 corresponding to a first channel (channel No. 1), an item 332 corresponding to a second channel (channel No. 2), and an item 333 corresponding to a third channel (channel No. 3)) in the item list 310. In this case, a channel name and a channel number of the broadcast channel may be displayed in the item indicating the broadcast channel. Alternatively, a screen image that a user watched last on the corresponding channel or an image indicating a program that is currently broadcast on the corresponding channel may be displayed in the item.

Even when the image display apparatus 100 senses a user input of selecting the highlighted item in the item list 310 of FIG. 6B, the image display apparatus 100 may display lower items 331, 332, and 333 included in the item, as shown in FIG. 6C.

The image display apparatus 100 may highlight the item 331 positioned at or proximal the center of the display unit 120 among the lower items displayed in the item list 310 and may display a channel number (e.g., No.1) corresponding to the highlighted item 331 at an upper portion of the item 331.

In addition, the image display apparatus 100 may sense a user input of moving the item list 310 while the lower items 331, 332, and 333 of category item "CHANNEL" are displayed. For example, the image display apparatus 100 may sense a touch input of dragging left or right on the touch pad 235 of the control apparatus 200. Alternatively, the image display apparatus 100 may sense an input of moving or tilting the control apparatus 200 left or right or may sense an input of pressing a left or right key among the four direction keys of the control apparatus 200.

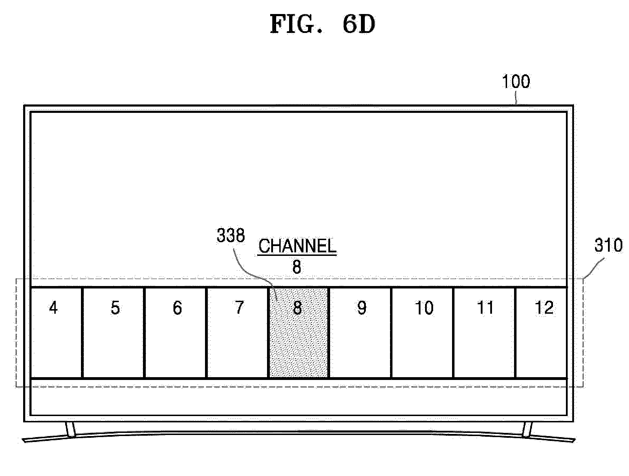

The image display apparatus 100 may move the item list and change the highlighted item in response to the sensed user input of moving the item list. For example, as shown in FIG. 6C, when a touch input of dragging right on the touch pad 235 is sensed, the image display apparatus 100 may move the item list 310 left, i.e., in a direction opposite to the right. When the item list 310 is moved left, as shown in FIG. 6D, an item 338 corresponding to channel No. 8 may be positioned at or proximal the center of the display unit 120 and then highlighted.

Upon sensing a user input of selecting the highlighted item (e.g., an item 338 corresponding to channel No. 8), the image display apparatus 100 may display a screen of the corresponding channel (e.g., channel No. 8) on the entirety of the display unit 120.

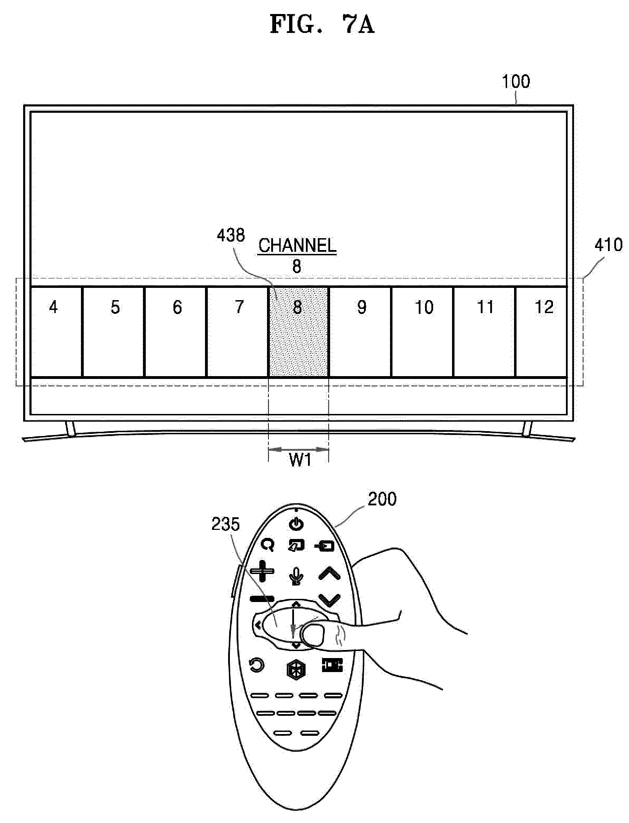

FIGS. 7A to 7F are views illustrating an example in which an item list is zoomed out on and then zoomed in on according to an exemplary embodiment.

Referring to FIG. 7A, a display unit 120 may display an item list 410 including a plurality of items. The plurality of items may each be an item indicating content. For example, the item indicating content may include an item indicating video content such as a movie or soap opera, an item indicating audio content such as music, an item indicating an application, an item indicating a broadcast channel, and an item indicating history information of content that a user has executed.

In this case, a content name of content corresponding to the item, an image indicating the content, and a screen image having been executed last in the content may be displayed in each of the plurality of items. For example, when the plurality of items are items indicating the broadcast channels, a channel name and a channel number of the broadcast channel may be displayed in each of the plurality of items. Alternatively, a screen image that a user watched last on the corresponding channel or an image indicating a program that is currently broadcast on the corresponding channel may be displayed in the item.

Referring to FIG. 7A, an item 438 positioned at or proximal the center of the display unit 120 among the plurality of items may be highlighted, and the highlighted item may be visibly displayed.

The image display apparatus 100 may sense a user input of zooming out on the item list. For example, as shown in FIG. 7A, the image display apparatus 100 may sense a touch input of dragging down, i.e., in a direction corresponding to the zoom-out, on the touch pad 235 of the control apparatus 200. Alternatively, the image display apparatus 100 may sense an input of moving or tilting the control apparatus 200 in the direction corresponding to the zoom-out or may sense an input of pressing a direction key corresponding to the zoom-out among the four direction keys of the control apparatus 200.

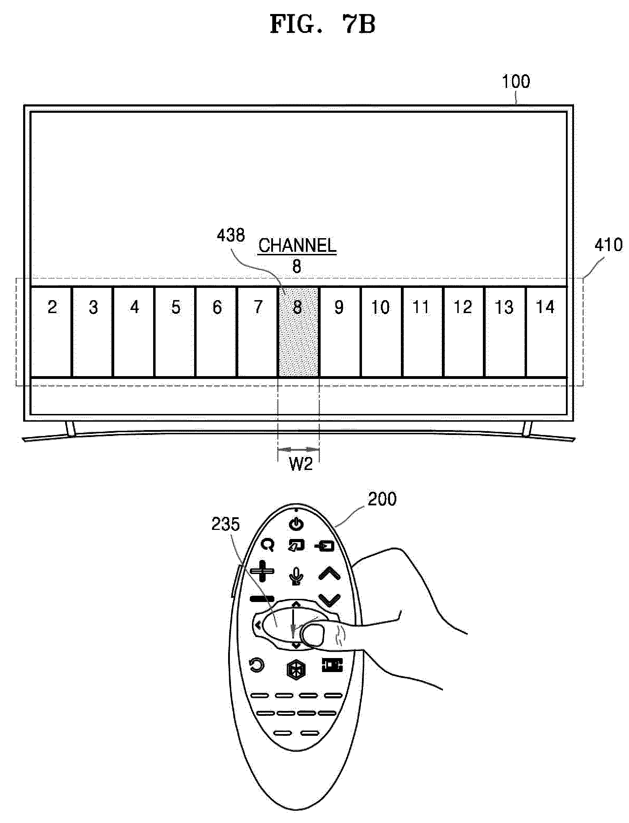

The image display apparatus 100 may gradually decrease the size of the plurality of items included in the item list in response to the sensed user input. For example, as shown in FIG. 7B, the image display apparatus 100 may gradually decrease the width of the plurality of items from a first width W1 to a second width W2 in response to the zoom-out input, in which the first width W1 may be greater than the second width W2. In this case, the image display apparatus 100 may decrease the width of the plurality of items on the basis of the size of the zoom-out input. For example, the image display apparatus 100 may further decrease the width of the plurality of items as a distance in a drag input on the touch pad 235, a distance in which the control apparatus 200 moves, a tilted angle, or a period during which a direction key is pressed increases.

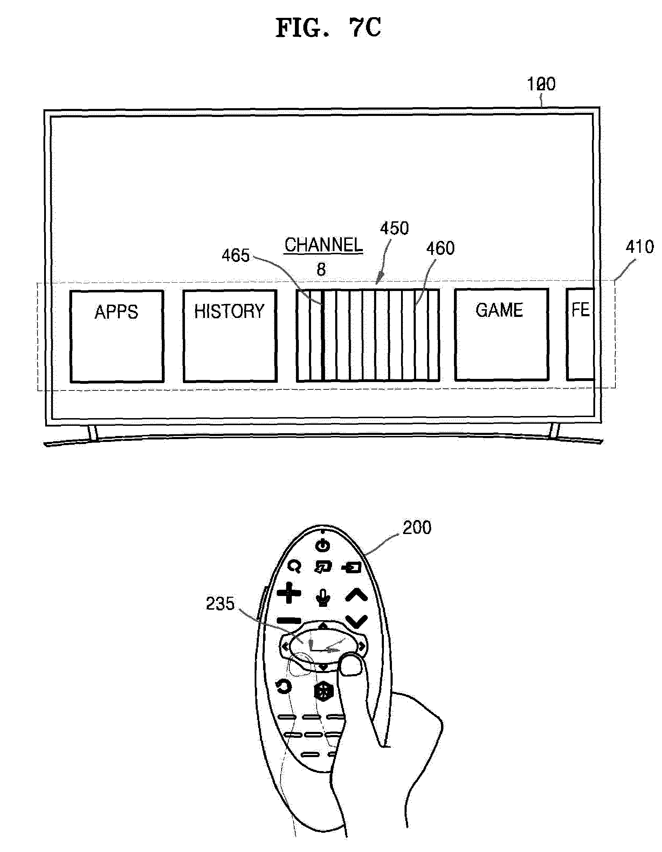

In addition, when the zoom-out input is consecutively (e.g. continuously) sensed while the width of the plurality of items is decreased to the second width W2, as shown in FIG. 7C, the image display apparatus 100 may display an upper item region 450 (i.e. a region comprising category items, as detailed above) including a plurality of items in the item list 410. For example, when the plurality of items are items indicating broadcast channels, its upper item may be category item "CHANNEL." Thus, the image display apparatus 100 may display a category item "CHANNEL" region 450 in the item list 410. In addition, the image display apparatus 100 may display another category item (e.g., category item "APPS," category item "HISTORY," and category item "GAME") having the same depth as category item "CHANNEL" in the item list 410.

The image display apparatus 100 may display lines corresponding to the plurality of items in the upper item region 450 such that the lines are listed in succession. In this case, the lines displayed in the upper item region may be lines perpendicular to a direction in which the plurality of items are arranged.

For example, as shown in FIG. 7C, for an item list in which category items are arranged in a transverse direction, the image display apparatus 100 may display longitudinal lines 460 corresponding to the plurality of items indicating the broadcast channels in the category item "CHANNEL" region 450.

In this case, a longitudinal line 465 positioned at or proximal the center of the display unit 120 among the plurality of longitudinal lines 460 may be highlighted, and the highlighted longitudinal line 465 may be displayed with a different thickness or color from the other longitudinal lines. In addition, a channel number (e.g., No. 8) of a broadcast channel corresponding to the highlighted longitudinal line 465 may be displayed at the top of the longitudinal line 465.

While the upper item region and the lines are displayed, the image display apparatus 100 may sense a user input of moving the item list 410.

For example, when an input of dragging down on the touch pad 235 of the control apparatus 200 is sensed as the zoom-out input, the image display apparatus 100 may sense an input of dragging left or right while maintaining a touch on a point where the drag ends. Alternatively, when an input of moving or tilting the control apparatus 200 down is sensed as the zoom-out input, the image display apparatus 100 may sense an input of moving or tilting the control apparatus 200 left or right while maintaining an inclined angle of the control apparatus 200 at a point where the movement (e.g., the zoom-out input) of the control apparatus 200 ends. Alternatively, when an input of pressing a down key among four direction keys of the control apparatus 200 is sensed as the zoom-out input, the image display apparatus 100 may sense an input of pressing a left key or right key among the four direction keys while pressing the down key.

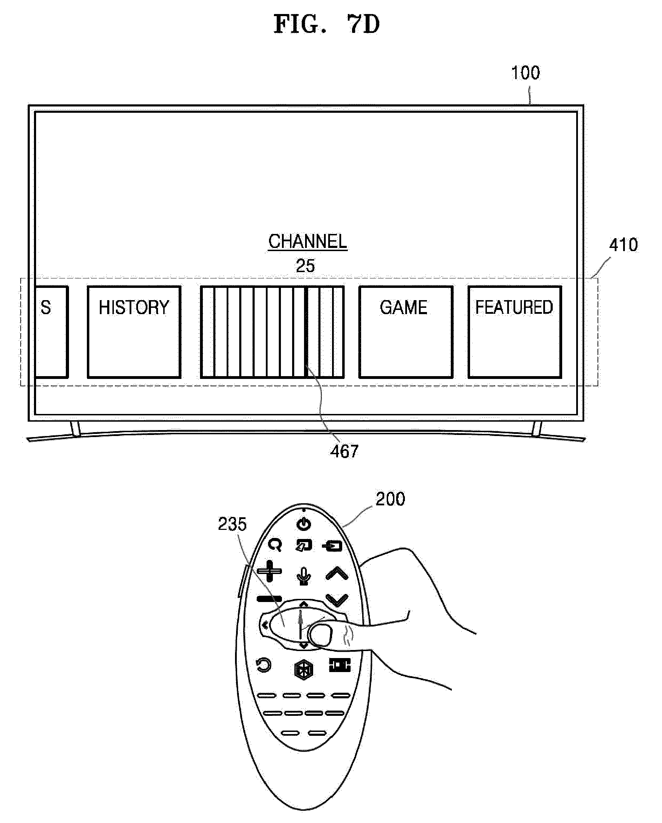

The image display apparatus 100 may move the item list 410 to change the highlighted item (e.g., the highlighted longitudinal line) in response to the sensed user input. For example, as shown in FIG. 7C, when an input of dragging right from a point where the zoom-out input ends on the touch pad 235 is sensed by the touch pad 235, the image display apparatus 100 may move the item list 410 left, i.e., in a direction opposite to the right. When the item list 410 is moved left, as shown in FIG. 7D, a longitudinal line 467 corresponding to channel No. 25 may be positioned at or proximal the center of the display unit 120 and then highlighted.

In addition, the image display apparatus 100 may set at least one of the plurality of items as a bookmark item. For example, an item corresponding to a user's preferred channel or a frequently-watched channel among the plurality of items indicating the broadcast channels may be set as the bookmark item.

The image display apparatus 100 may sense a user input of moving a longitudinal line corresponding to the bookmark item in a direction toward the center (a position where the longitudinal line may be highlighted) of the display unit 120. In this case, when a distance between the longitudinal line corresponding to the bookmark item and the center (highlighted point) of the display unit 120 is equal to or less than a predetermined distance, the image display apparatus 100 may quickly move the longitudinal line corresponding to the bookmark item to the center (highlighted point) of the display unit 120. Thus, when the longitudinal line corresponding to the bookmark item becomes close to the highlighted point, the image display apparatus 100 may move the item list such that a user feels like the longitudinal line corresponding to the bookmark item may be attached to the highlighted point like magnet.

When the sensed user input is disengaged while the item list is zoomed in or out on, the image display apparatus 100 may gradually spring the zoomed-in or zoomed-out item list back to an original item list.

For example, as shown in FIG. 7B, when the sensed user input is disengaged (e.g., when a user takes the hand off the touch pad) while the width of the plurality of items are decreased, the image display apparatus 100 may gradually increase the width of the plurality of items, thus springing the item list back to the item list of the FIG. 7A.

In addition, as shown in FIG. 7C or 7D, when the sensed user input is disengaged (e.g., when a user takes the hand off the touch pad) while the lines corresponding to the plurality of items are displayed, the image display apparatus 100 may change the plurality of lines into the plurality of items corresponding to the lines and gradually increase the width of the plurality of items, thus springing the item list 410 back to the item list of FIG. 7A.

Alternatively, when a predetermined user input (e.g., a flip input) is sensed while the item list is zoomed out on, the image display apparatus 100 may maintain the zoom-out although the sensed user input is disengaged.

While the item list is zoomed out on, the image display apparatus 100 may sense a user input of zooming back in on the item list. For example, as shown in FIG. 7D, the image display apparatus 100 may sense a touch input of dragging up (e.g., in a direction corresponding to the zoom-in) on the touch pad 235 of the control apparatus 200. Alternatively, the image display apparatus 100 may sense an input of moving or tilting the control apparatus 200 in the direction corresponding to the zoom-in or may sense an input of pressing a direction key corresponding to the zoom-in among the four direction keys of the control apparatus 200.

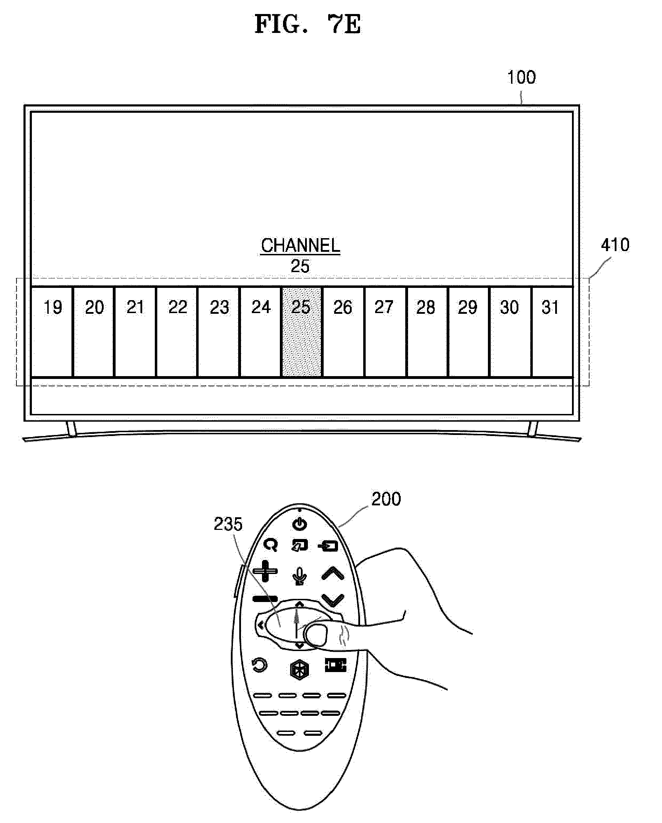

The image display apparatus 100 may gradually increase the width of lines displayed in the upper item region in response to the sensed zoom-in input. When the width of the lines exceeds a predetermined width, as shown in FIG. 7E, the image display apparatus 100 may change the lines into the plurality of items corresponding to the lines and then display the changed items. In this case, the predetermined width may be different from the second width W2 described above in FIG. 7B.

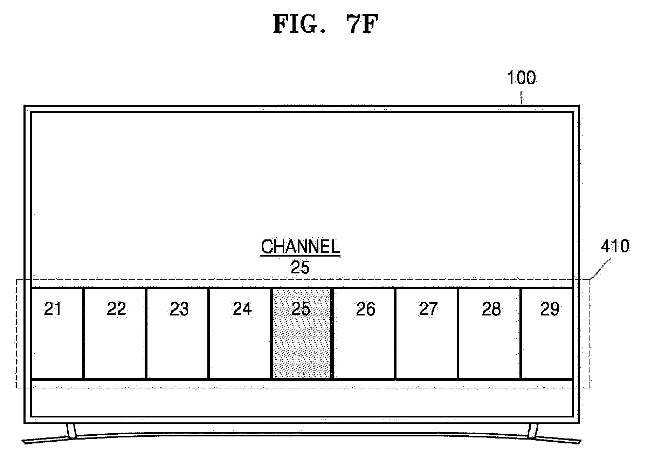

In addition, when the zoom-in input is consecutively sensed while the plurality of items are displayed, as shown in FIG. 7F, the image display apparatus 100 may display the plurality of items with a gradual increase in width.

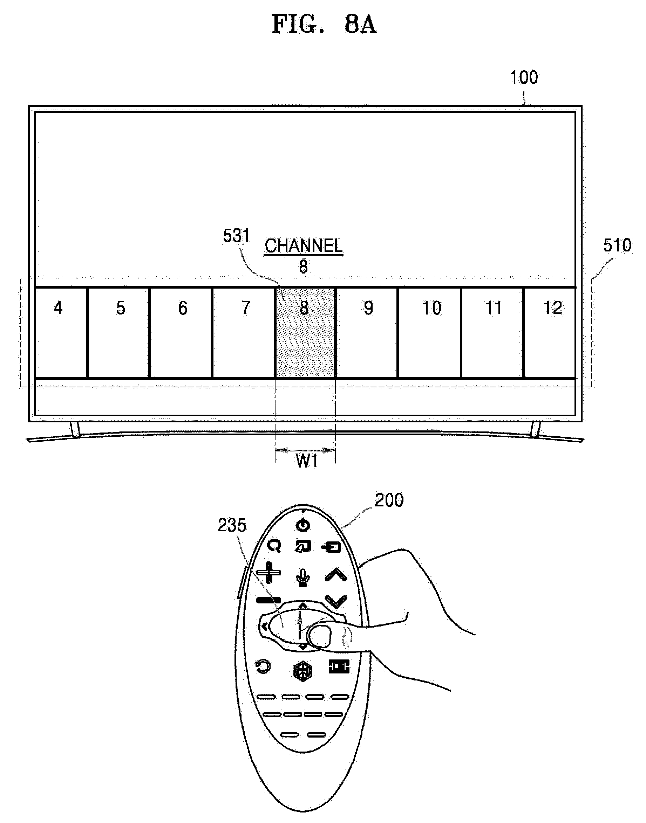

FIGS. 8A to 8D are views illustrating an example in which an item list is zoomed in on according to an exemplary embodiment.

Referring to FIG. 8A, a display unit 120 may display an item list 510 including a plurality of items. The item list 510 of FIG. 8A may be the same as the item list 410 of FIG. 7A. The item list has been described in detail with reference to FIG. 7A, and thus its repetitive description will be omitted.

In addition, the item 531 positioned at or proximal the center of the display unit 120 among the plurality of items may be highlighted, and the highlighted item may be visibly displayed.

The image display apparatus 100 may sense a user input of zooming in on the item list 510. For example, as shown in FIG. 8A, the image display apparatus 100 may sense a touch input of dragging up (i.e., in a direction corresponding to the zoom-in) on the touch pad of the control apparatus 200. Alternatively, the image display apparatus 100 may an input of moving or tilting the control apparatus 200 in the direction corresponding to the zoom-in or may sense an input of pressing a direction key corresponding to the zoom-in among the four direction keys of the control apparatus 200.

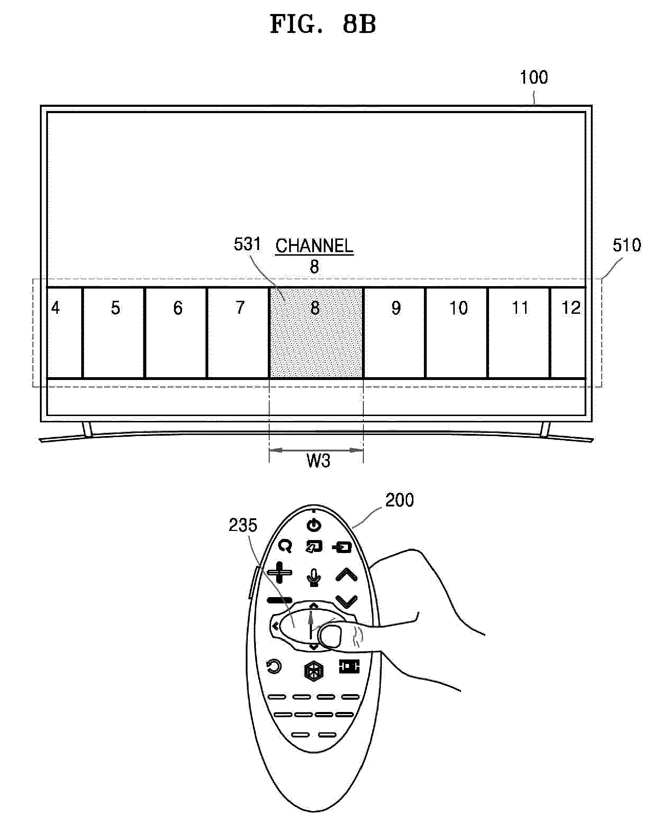

The image display apparatus 100 may gradually increase the size of the highlighted item in response to the sensed user input. For example, as shown in FIG. 8B, the image display apparatus 100 may gradually increase the width of the highlighted first item 531 from the first width W1 to a third width W3 in response to the zoom-in input. In addition, when the zoom-in input is consecutively sensed while the width of the first item 531 is increased to the third width W3, the image display apparatus 100 may display detailed information about content corresponding to the first item 531 while gradual increasing the width of the first item 531 to a fourth width W4, in which the fourth width W4 may be greater than the third width W3 which may be greater than the first width W1.

In this case, the detailed information about content may include a screen image obtained by executing the content last, a date at which the content is executed last, a type of the content, and a person present in the content. For example, when the content is a broadcast channel, the detailed information about the content may include information about a program that may be broadcast on the broadcast channel in real time.

While the highlighted item is displayed with an increase in width, the image display apparatus 100 may sense a user input of moving the item list 510.

For example, when an input of dragging up on the touch pad of the control apparatus 200 is sensed as the zoom-in input, the image display apparatus 100 may sense an input of dragging left or right while maintaining a touch on a point where the drag ends. Alternatively, when an input of moving or tilting the control apparatus 200 up is sensed as the zoom-in input, the image display apparatus 100 may sense an input of moving or tilting the control apparatus 200 left or right while maintaining an inclined angle of the control apparatus 200 at a point where the movement (e.g., the zoom-in input) of the control apparatus 200 ends and may move the item list. Alternatively, when an input of pressing an up key among four direction keys of the control apparatus 200 is sensed as the zoom-in input, the image display apparatus 100 may sense an input of pressing a left key or right key among the four direction keys while pressing the up key.

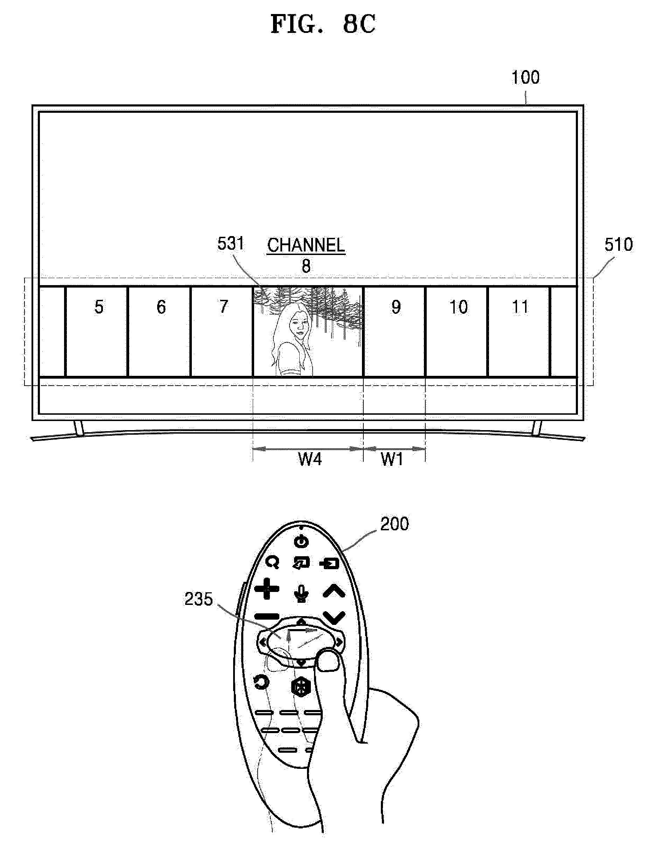

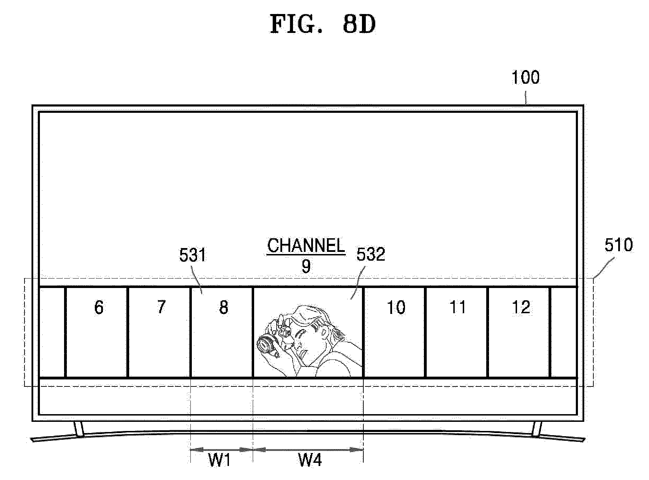

The image display apparatus 100 may move the item list 510 to change the highlighted item in response to the sensed user input. For example, as shown in FIG. 8C, when an input of dragging right on the touch pad of the control apparatus 200 is sensed, the image display apparatus 100 may move the item list 510 left, i.e., in a direction opposite to the right. When the item list 510 is moved left, as shown in FIG. 8D, a second item 532 having been positioned at a right side of the first item 531 is moved to the center of the display unit 120 and then highlighted.

In this case, the width of the first item 531 may be decreased from the fourth width W4 to the first width W1, and the width of the second item 532 may be increased from the first width W1 to the fourth width W4. In addition, detailed information having been displayed in the first item 531 may not be displayed, and detailed information about a second item 532 may be displayed in the second item 532.

When the sensed user input is disengaged while the width of the highlighted item is increased or detailed information is displayed, the image display apparatus 100 may spring the item list back to its original state.

For example, as shown in FIG. 8C, when the sensed user input is disengaged (e.g., when a user takes the hand off the touch pad) while the item list is zoom in on, the image display apparatus 100 may spring the item list 510 back to the item list of FIG. 8A by gradually decreasing the width of the highlighted item and not displaying the detailed information.

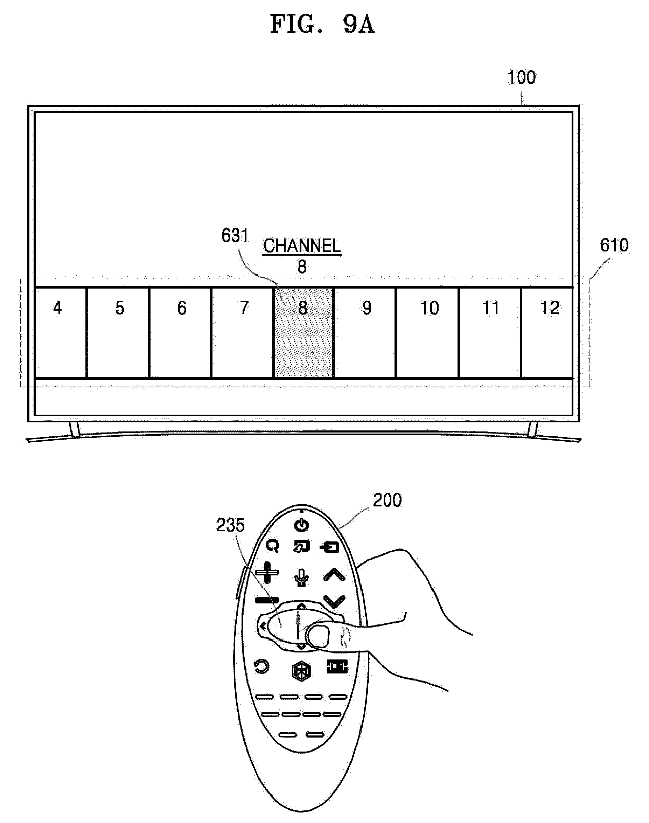

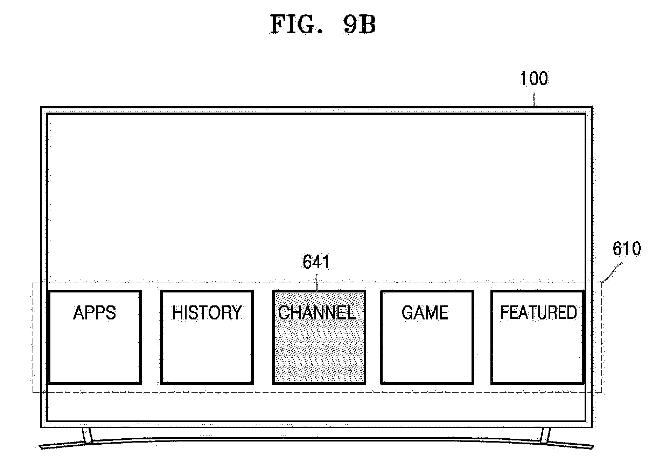

FIGS. 9A and 9B are views illustrating an example in which an item list is zoomed in on according to an exemplary embodiment.

Referring to FIG. 9A, a display unit 120 may display an item list 610 including a plurality of items. The item list 610 of FIG. 9A may be the same as the item list 410 of FIG. 7A. The item list has been described in detail with reference to FIG. 7A, and thus its repetitive description will be omitted.

In addition, an item 631 positioned at or proximal the center of the display unit 120 among the plurality of items may be highlighted, and the highlighted item may be visibly displayed.

The image display apparatus 100 may sense a user input of zooming in on the item list. For example, as shown in FIG. 9A, the image display apparatus 100 may sense a touch input of dragging up (e.g., in a direction corresponding to the zoom-in) on the touch pad 235 of the control apparatus 200.

The image display apparatus 100 may display an upper item including a plurality of items in response to the sensed zoom-in input.

For example, when the plurality of items included in the item list 610 of FIG. 9A are items indicating broadcast channels, the image display apparatus 100 may display category item "CHANNEL" 641 including the items indicating the broadcast channels in the item list 610. In addition, the image display apparatus 100 may display another category item (e.g., category item "APPS," category item "HISTORY," and category item "GAME") having the same depth as category item "CHANNEL" in the item list 610. In this case, category item 641 "CHANNEL" may be positioned at or proximal the center of the display unit 120 and then highlighted.

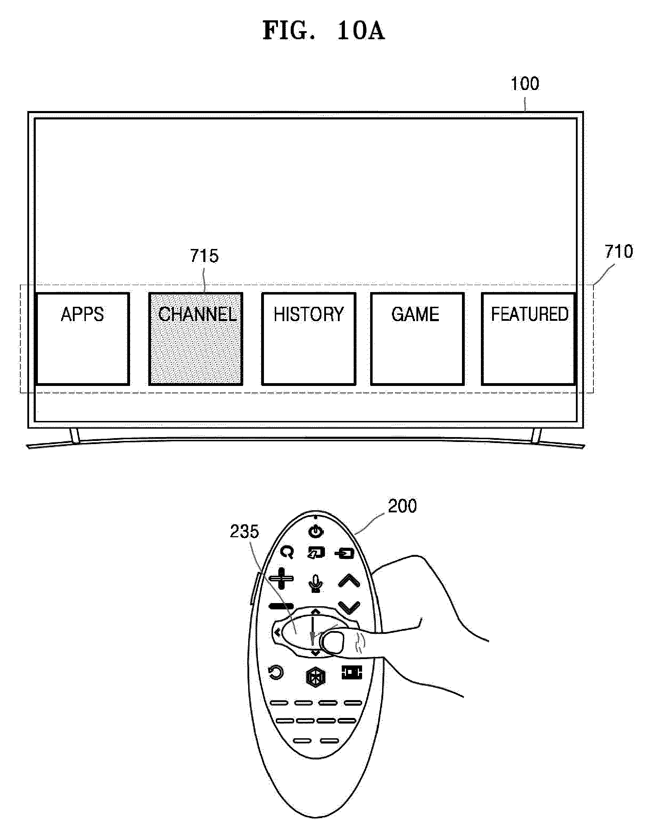

FIGS. 10A to 10F are views illustrating an example in which an item list is zoomed out on and then zoomed in on according to an exemplary embodiment.

Referring to FIG. 10A, a display unit 120 may display an item list 710 including a plurality of items at the bottom of the display unit 120. The item list 710 of FIG. 10A may be the same as the item list 310 of FIG. 6A, and thus its repetitive description will be omitted.

Referring again to FIG. 10A, any one item 715 may be highlighted among the plurality of items, and the highlighted item 715 may be visibly displayed. For example, the image display apparatus 100 may highlight any one of the plurality of items by changing the color of the item or displaying a quadrangular box around the border of the item.

When a user input of moving the highlight is sensed, the image display apparatus 100 may move the highlight to change the highlighted item in accordance with a direction of the user input. For example, as shown in FIG. 10A, when the item list 710 is a list in which items are transversely arranged, the image display apparatus 100 may sense an input of moving the highlight left or right and change the highlighted item.

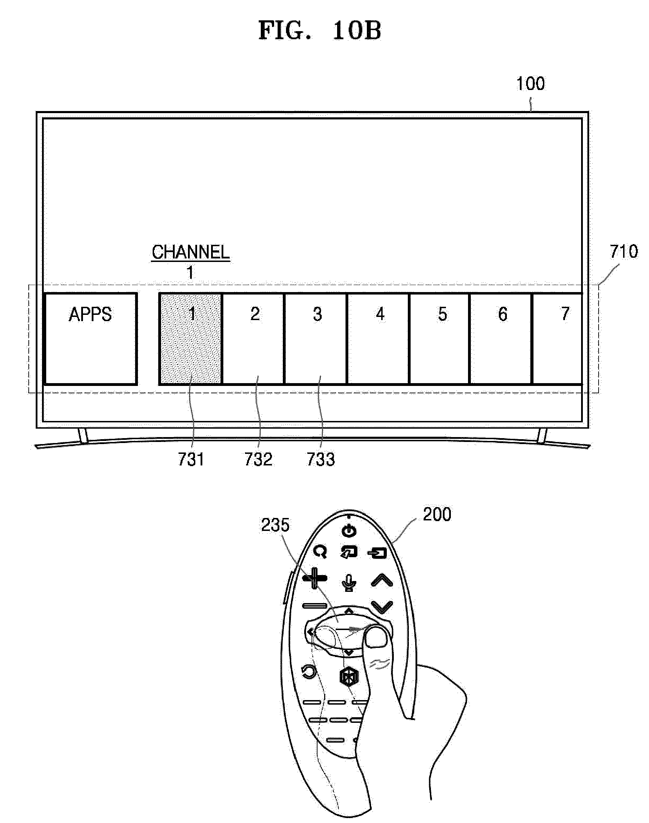

In addition, when the image display apparatus 100 senses a user input of zooming out on the item list 710, as shown in FIG. 10B, the image display apparatus 100 may display lower items included in the highlighted item in the item list 710.

For example, when an input of zooming out on the item list (e.g., a touch input of dragging down on the touch pad 235) is sensed while category item "CHANNEL" 715 is highlighted, as shown in FIG. 10B, the image display apparatus 100 may display items 731, 732, and 733 indicating broadcast channels included in category item "CHANNEL" in the item list 710.

In addition, the image display apparatus 100 may sense a user input of moving the highlight while the lower items of category item "CHANNEL" are displayed. The image display apparatus 100 may move the highlight to change the highlighted item in response to the sensed user input.

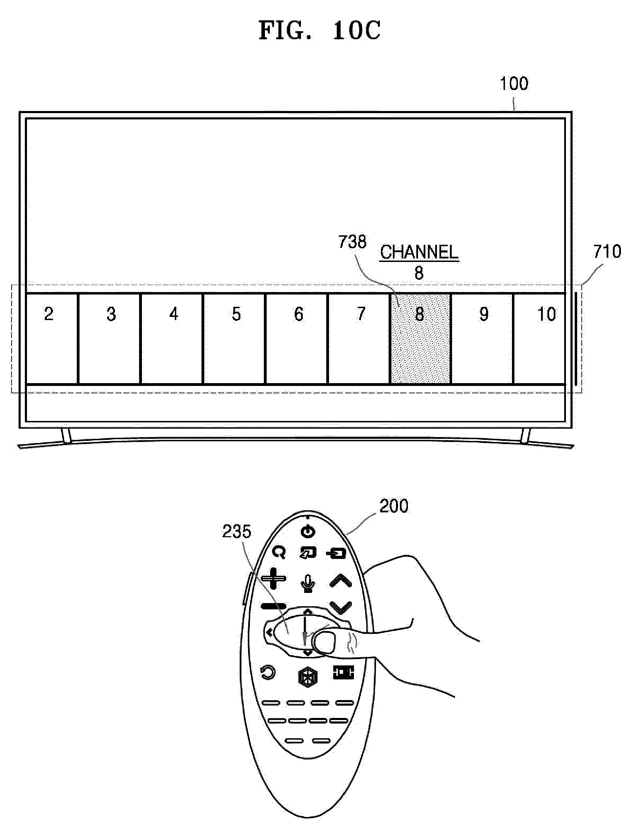

For example, as shown in FIG. 10B, when a touch input of dragging right on the touch pad 235 is sensed, the image display apparatus 100 may move the highlight right. When the highlight is moved right, as shown in FIG. 10C, an item 738 corresponding to channel No. 8 may be highlighted.

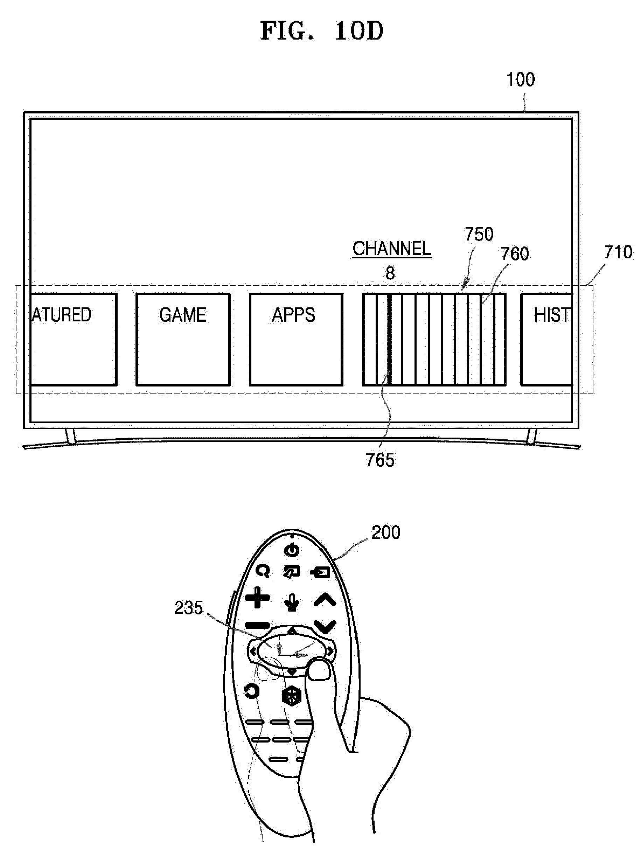

In addition, when a user input of zooming out on the item list is sensed while the lower items of category item "CHANNEL" are displayed, the image display apparatus 100 may gradually decrease the size (e.g., width) of the lower items. In addition, when the zoom-out input is consecutively sensed while the width of the items is decreased to a predetermined width (e.g., the second width W2), as shown in FIG. 10D, the image display apparatus 100 may display an upper item region 750 including lower items in the item list 710.

In addition, the image display apparatus 100 may display lines 760 corresponding to the lower items in the upper item region 750 such that the lines are listed in succession. This has been described in detail with reference to FIG. 7C, and its repetitive description will be omitted.

In this case, any one line 765 may be highlighted among the plurality of lines, and the highlighted line 765 may be displayed with a different thickness or color from the other lines.

While the upper item region and the lines are displayed, the image display apparatus 100 may sense a user input of moving the highlight. The user input of moving the highlight may be the same as the user input of moving the item list described in FIG. 7C.

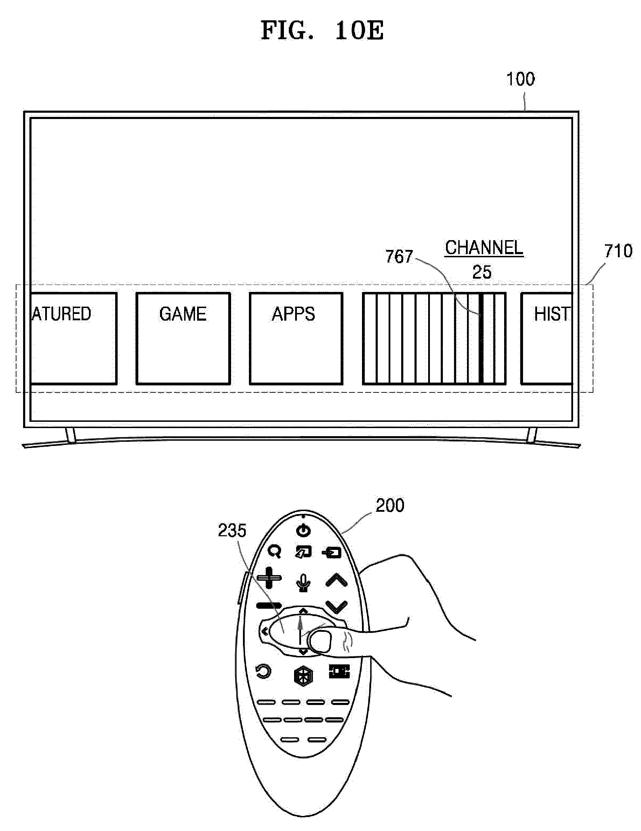

The image display apparatus 100 may move the highlight to change the highlighted item (e.g., the highlighted longitudinal line) in response to the sensed user input. For example, as shown in FIG. 10D, when an input of dragging right from a point where the zoom-out input ends on the touch pad 235 is sensed, the image display apparatus 100 may move the highlight right. When the highlight is moved right, as shown in FIG. 10E, a longitudinal line 767 corresponding to channel No. 25 may be highlighted.

The image display apparatus 100 may sense a user input of zooming in on the item list. For example, as shown in FIG. 10E, the image display apparatus 100 may sense a touch input of dragging up (e.g., in a direction corresponding to the zoom-in) on the touch pad 235 of the control apparatus 200.

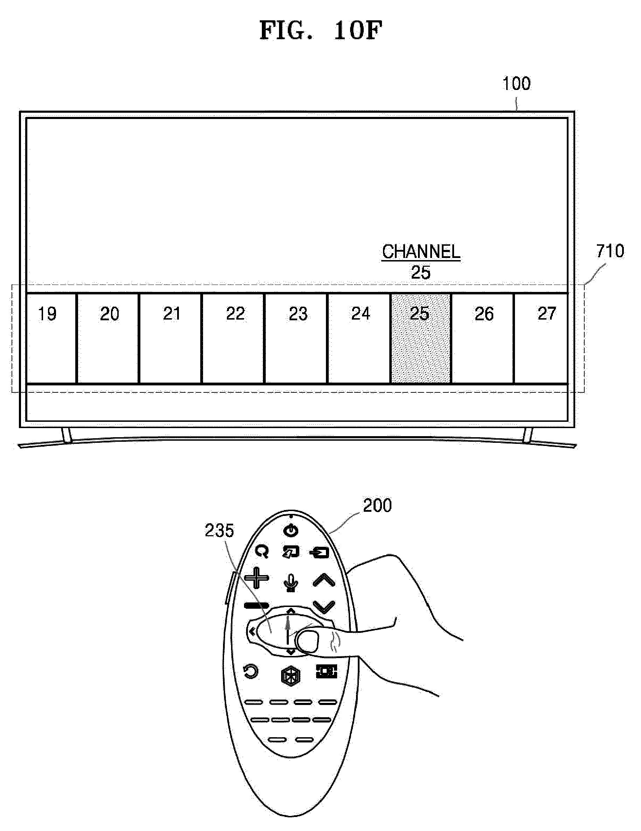

The image display apparatus 100 may gradually increase the width of lines displayed in the upper item region 750 in response to the sensed zoom-in input. When the width of the lines exceeds a predetermined width, as shown in FIG. 10F, the image display apparatus 100 may change the lines into the plurality of items corresponding to the lines and then display the changed items.

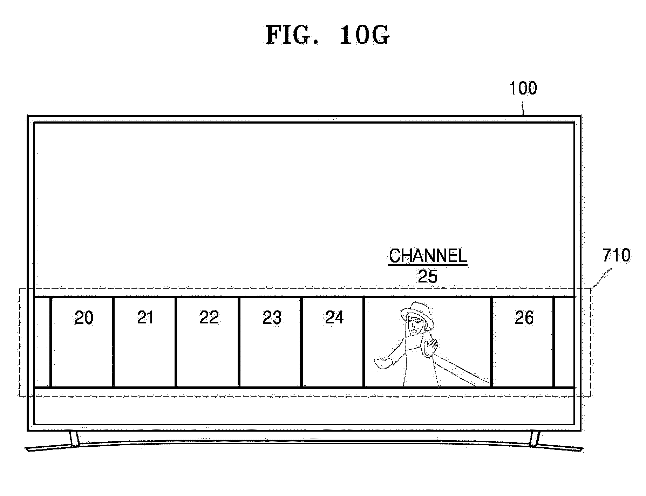

In addition, when the zoom-in input (e.g., a touch input of dragging up on the touch pad) is consecutively sensed while the plurality of items are displayed, as shown in FIG. 10F, the image display apparatus 100 may display the plurality of items with a gradual increase in width. In addition, when the zoom-in input is consecutively sensed, as shown in FIG. 10G, the image display apparatus 100 may display, in the highlighted item, detailed information about content corresponding to the item.

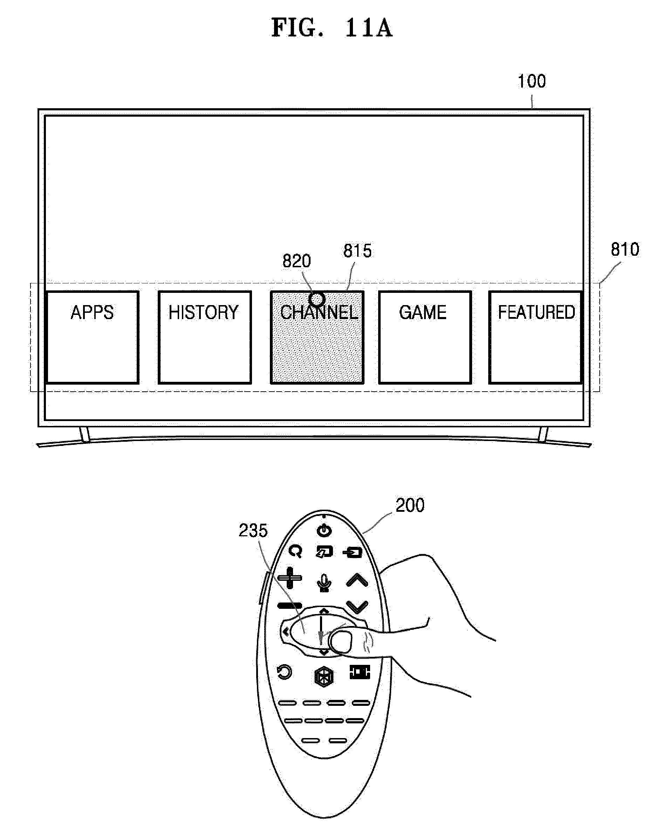

FIGS. 11A to 11G are views illustrating an example in which an item list is zoomed out on and then zoomed in on according to an exemplary embodiment.

Referring to FIG. 11A, a display unit 120 may display an item list 810 including a plurality of items at the bottom of the display unit 120. The item list 810 of FIG. 11A may be the same as the item list 310 of FIG. 6A.

Referring again to FIG. 11A, the display unit 120 may display a cursor 820 indicating a position of a user input. The cursor 820 may be moved on the display unit 120 in response to the sensed user input.

In FIG. 11A, the cursor 820 is shown to be a circle, but is not limited thereto. The cursor 820 may have various shapes and sizes. The shape and size of the cursor 820 may be set variously on the basis of a user input.

The cursor 820 may be positioned in any one of a plurality of items included in the item list 810. When the cursor 820 is positioned in any one of the plurality of items, an item 815 may be highlighted, and the highlighted item may be visibly displayed. For example, the image display apparatus 100 may highlight the item by changing the color of the highlighted item or displaying a quadrangular box around the border of the item.

When a user input of moving the cursor is sensed, the image display apparatus 100 may move the cursor to change the highlighted item in accordance with a direction of the user input. For example, as shown in FIG. 11A, when the item list 810 may be a list in which items are transversely arranged, the image display apparatus 100 may move the cursor 820 and change the highlighted item according to the position of the cursor 820 in response to an input of moving the cursor 820 left or right.

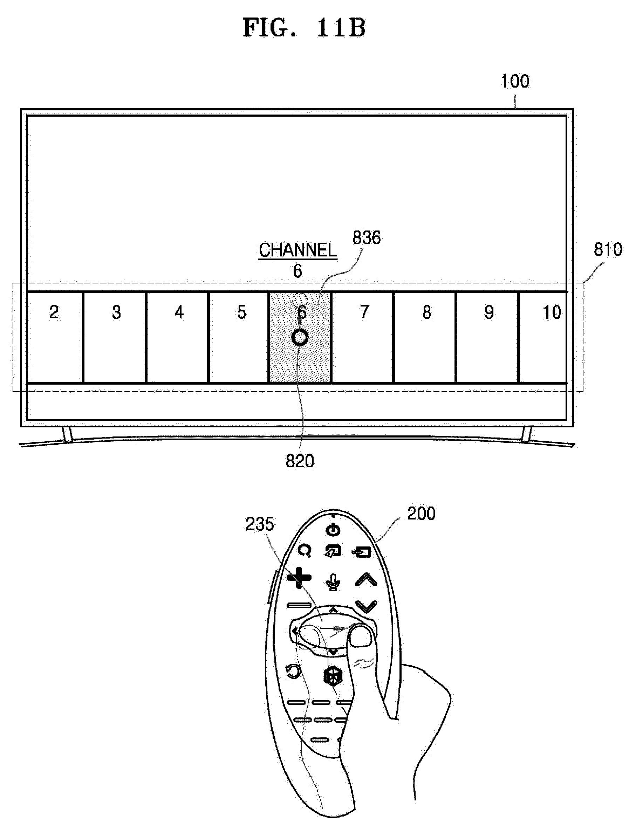

In addition, when the image display apparatus 100 senses a user input of zooming out on the item list 810, as shown in FIG. 11 B, the image display apparatus 100 may display lower items included in the highlighted item in the item list 810.

For example, when an input of zooming out on the item list (e.g., an input of moving the cursor 820 down) is sensed while category item "CHANNEL" 815 is highlighted, as shown in FIG. 11B, the image display apparatus 100 may display lower items (e.g., items indicating broadcast channels) included in category item "CHANNEL" in the item list 810.

In addition, the image display apparatus 100 may sense a user input of moving the cursor 820 while the lower items of category item "CHANNEL" are displayed. The image display apparatus 100 may move the cursor 820 and change the highlighted item according to the position of the cursor 820, in response to the sensed user input.

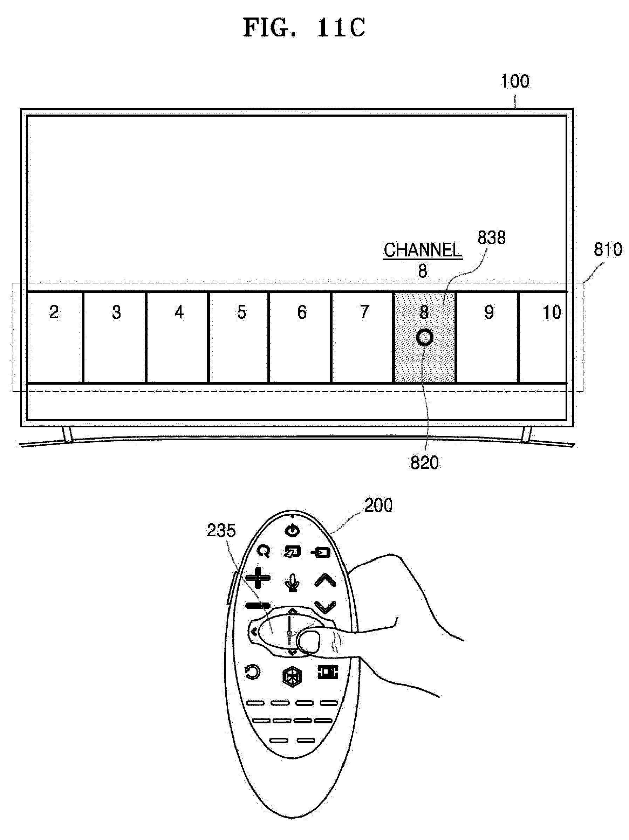

For example, when an input of moving the cursor right (e.g., a touch input of dragging right on the touch pad 235) is sensed, the image display apparatus 100 may move the cursor displayed on the display unit 120 right in response to the sensed input. Thus, as shown in FIG. 11C, the cursor 820 may be moved to an item 838 corresponding to channel No. 8, and the item 838 corresponding to No. 8 may be highlighted.

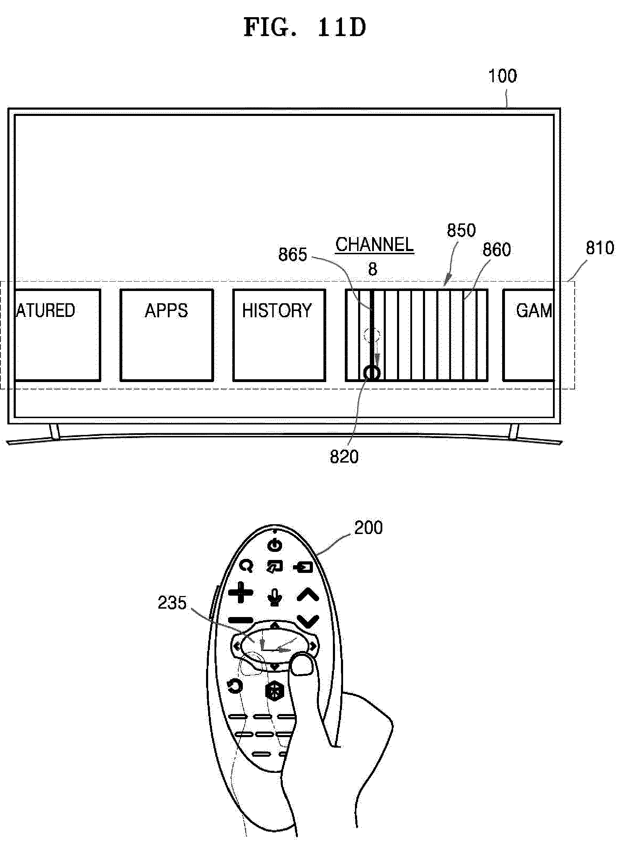

In addition, when a user input of zooming out on the item list is sensed while the lower items of category item "CHANNEL" are displayed, the image display apparatus 100 may gradually decrease the size (e.g., width) of the lower items. In addition, when the zoom-out input is consecutively sensed while the width of the items is decreased to a predetermined width (e.g., W2), as shown in FIG. 11D, the image display apparatus 100 may display an upper item region 850 including lower items in the item list 810.

In addition, the image display apparatus 100 may display lines 860 corresponding to the lower items in the upper item region 850 such that the lines are listed in succession. This has been described in detail with reference to FIG. 7C, and its repetitive description will be omitted.

In this case, the cursor 820 may be positioned on any one line 865 among the plurality of lines. When the cursor 820 is positioned on any one line among the plurality of lines, the line 865 may be highlighted, and the highlighted line 865 may be display with a different thickness or color from the other lines.

While the lines are displayed in the upper item region and the upper item, the image display apparatus 100 may sense a user input of moving the cursor 820. The user input of moving the cursor 820 may be the same as the user input of moving the item list described in FIG. 7C.

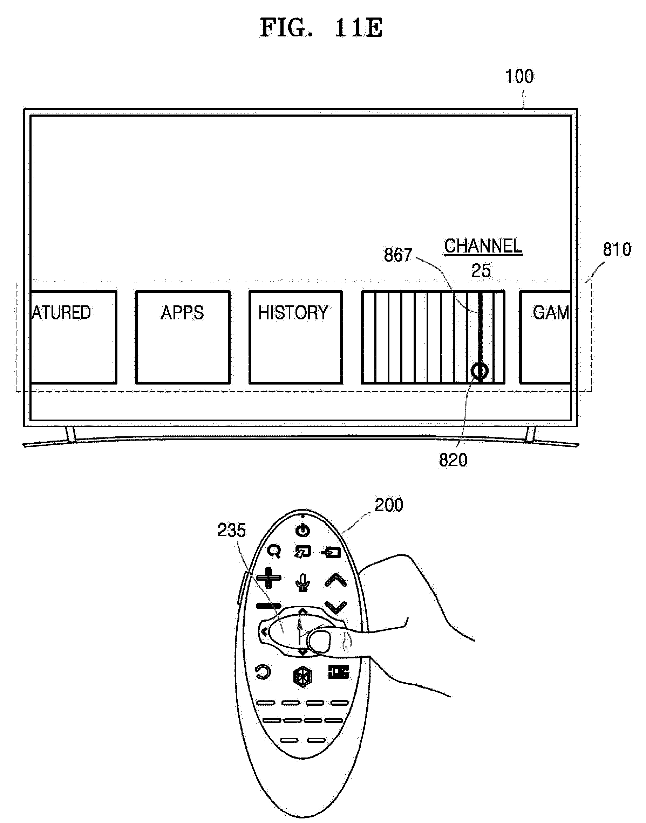

The image display apparatus 100 may move the cursor 820 to change the highlighted line in response to the sensed user input. For example, as shown in FIG. 11D, when an input of dragging right from a point where the zoom-out input ends on the touch pad 235 is sensed, the image display apparatus 100 may move the cursor 820 right. When the cursor 820 is moved right, as shown in FIG. 11 E, a longitudinal line 867 corresponding to channel No. 25 may be highlighted.

The image display apparatus 100 may sense a user input of zooming in on the item list. For example, as shown in FIG. 11E, the image display apparatus 100 may sense a touch input of dragging up (e.g., in a direction corresponding to the zoom-in) on the touch pad 235 of the control apparatus 200.

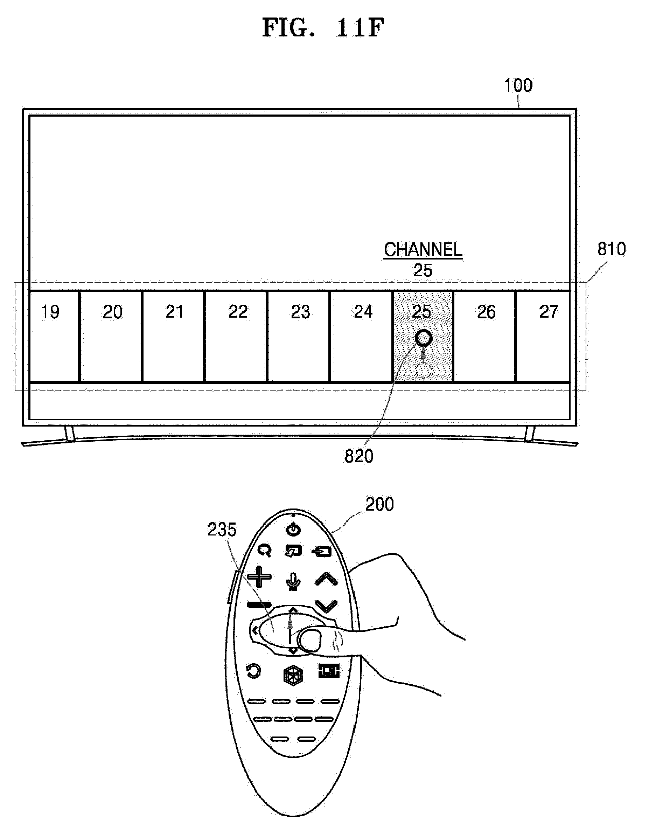

The image display apparatus 100 may gradually increase the width of lines displayed in the upper item region in response to the sensed zoom-in input. When the width of the lines exceeds a predetermined width, as shown in FIG. 11 F, the image display apparatus 100 may change the lines into the plurality of items corresponding to the lines and then display the changed items.

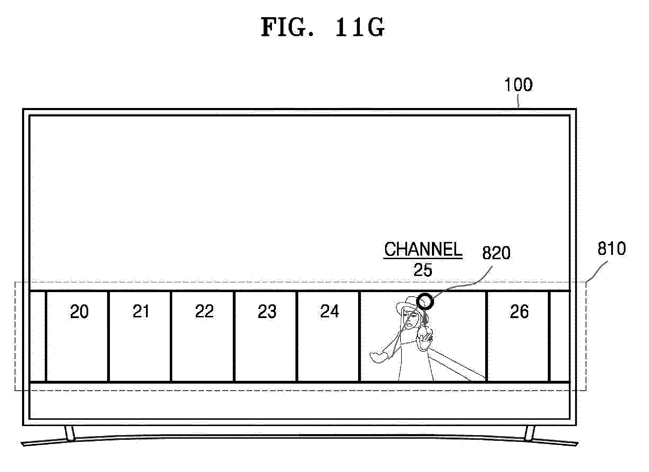

In addition, when the zoom-in input (e.g., a touch input of dragging up on the touch pad) is consecutively sensed while the plurality of items are displayed, the image display apparatus 100 may display the plurality of items with a gradual increase in width. In addition, when the zoom-in input is consecutively sensed, as shown in FIG. 11G, the image display apparatus 100 may display, in the highlighted item, detailed information about content corresponding to the item.

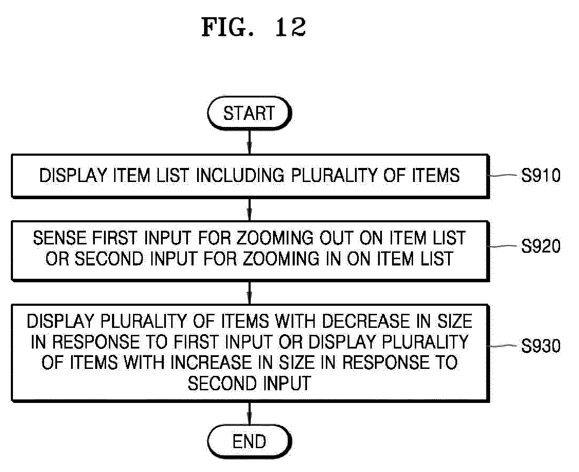

FIG. 12 is a flowchart showing an image display method according to an exemplary embodiment.

Referring to FIG. 12, the image display apparatus 100 may display an item list including a plurality of items (S910).

For example, the item list according to an exemplary embodiment may include an item indicating a category and an item indicating content. The category item may include, as lower items, items indicating content classified into a corresponding category. The item list may be a list in which a plurality of items are arranged in a transverse direction or a longitudinal direction.

The image display apparatus 100 may sense a first input for zooming out on the item list or a second input for zooming in on the item list (S920).

For example, the first input for zooming out on the item list may include a touch input of dragging in a direction corresponding to the zoom-out (e.g., down) on a touch pad 235 on a condition that the control apparatus 200 includes the touch pad 235, a user input of moving or tilting the control apparatus 200 in a direction corresponding to the zoom-out on a condition that the control apparatus 200 is the pointing device, and an input of pressing a direction key corresponding to the zoom-out among four direction keys on a condition that the control apparatus 200 includes the four direction keys.

In addition, the second input for zooming in on the item list may include a touch input of dragging in a direction corresponding to the zoom-in (e.g., up) on the touch pad 235 of the control apparatus 200, an input of moving or tilting the control apparatus 200 in the direction corresponding to the zoom-in, and an input of pressing a direction key corresponding to the zoom-in among the four direction keys of the control apparatus 200.

The image display apparatus 100 may display the plurality of items with a decrease in size in response to the first input and may display the plurality of items with an increase in size in response to the second input (S930).

For example, the image display apparatus 100 may gradually decrease the width of the plurality of items included in the item list in response to the first input. In this case, the image display apparatus 100 may further decrease the width of the plurality of items as the size of the first input increases. In addition, the image display apparatus 100 may display an upper item region including the plurality of items and may display lines corresponding to the plurality of items in the upper item region such that the lines are listed in succession, in response to the first input.

The image display apparatus 100 may display lower items included in at least one of the plurality of items in response to the first input.

The image display apparatus 100 may gradually increase the width of the plurality of items included in the item list in response to the second input. In addition, the image display apparatus 100 may display detailed information about content corresponding to at least one of the plurality of items in response to the second input.

The image display apparatus 100 may gradually increase the width of lines displayed in the upper item region in response to the second input. When the width of the lines exceeds a predetermined width, the image display apparatus 100 may change the lines into the plurality of items corresponding to the lines and then display the changed items.

Upper or lower items, as discussed above, may be upper or lower in terms of a hierarchically arranged data or presentation/interface structure, as opposed to an item being physically above or below another item.

The image display method according to an exemplary embodiment may be implemented as program instructions executable by a variety of computers and recorded on a computer readable medium. The computer-readable medium may also include a program instruction, a data file, a data structure, or combinations thereof. The program instructions recorded on the media may be designed and configured specially for the exemplary embodiments or be known and available to those skilled in computer software. Examples of the computer-readable medium include a magnetic medium, such as a hard disk, a floppy disk, and a magnetic tape, an optical medium, such as a CD-ROM, a DVD, etc., a magneto-optical medium such as a floptical disk, and a hardware device specially configured to store and perform program instructions, for example, a ROM, RAM, flash memory, etc. Examples of the program instructions include machine codes made by, for example, a compiler, as well as high-level language codes executable by a computer, using an interpreter.

According to an exemplary embodiment, a user may easily and quickly retrieve an item from an item list or move between a plurality of items in the item list by zooming in/out on the item list.

According to an exemplary embodiment, a user may easily and quickly search for important content by setting a bookmark item.

Although a few preferred embodiments have been shown and described, it will be appreciated by those skilled in the art that various changes and modifications might be made without departing from the scope of the invention, as defined in the appended claims.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. An image display apparatus (100) comprising:
a display unit (120) configured to display an item list including a plurality of items;
a sensing unit (130) configured to sense a first input for zooming out on the item list or a second input for zooming in on the item list; and
a control unit (110) configured to display the plurality of items with a decrease in size in response to the first input or display the plurality of items with an increase in size in response to the second input.

2. The image display apparatus (100) of claim 1, wherein the first input includes at least one of an input of dragging in a first direction on a touch pad when the touch pad is included in a control apparatus (200) for controlling the image display apparatus (100), an input of tilting a pointing device in a second direction when the control apparatus (200) is the pointing device, and an input of pressing a direction key when the control apparatus includes four direction keys.

3. The image display apparatus (100) of any previous claim, wherein the second input includes at least one of an input of dragging in a third direction opposite to the first direction on the touch pad, an input of tilting the pointing device in a fourth direction opposite to the second direction, and an input of pressing an opposite direction key of the direction key among the four direction keys.

4. The image display apparatus (100) of any previous claim, wherein the control unit (110) displays lower items included in at least one of the plurality of items in response to the first input.

5. The image display apparatus (100) of any previous claim, wherein the control unit (110) displays an upper item region including the plurality of items and displays lines corresponding to the plurality of items in the upper item region such that the lines are listed in succession, in response to the first input.

6. The image display apparatus (100) of claim 5, wherein,
the sensing unit (130) senses the second input while the lines are displayed, and
the control unit (110) changes the lines into the plurality of items corresponding to the lines and displays the changed items, in response to the second input.

7. The image display apparatus (100) of any previous claim, wherein,
the sensing unit (130) senses a user input of moving a bookmark item among the plurality of items in a direction toward a highlighted point, and
the control unit (110) increases a moving speed of the bookmark item and moves the bookmark item to the highlighted point when a distance between the bookmark item and the highlighted point is equal to or less than a predetermined distance.

8. The image display apparatus (100) of any previous claim, wherein the control unit (110) displays detailed information about at least one of the plurality of items in response to the second input.

9. The image display apparatus (100) of any previous claim, wherein the control unit (110) displays an upper item including the plurality of items in response to the second input.

10. The image display apparatus (100) of any previous claim, wherein, when the sensed input is disengaged while the plurality of items are displayed with a decrease or increase in size, the control unit (110) springs the plurality of items back to original states thereof.

11. The image display apparatus (100) of any previous claim, wherein, when a flip input is sensed while the plurality of items are displayed with a decrease or increase in size, the control unit (110) maintains a state in which the plurality of items are displayed with a decrease or increase in size although the sensed input is disengaged.

12. The image display apparatus (100) of any previous claim, wherein,
the sensing unit (130) senses a third input for moving the item list, and
the control unit (110) moves the item list to change a highlighted item among the plurality of items in response to the third input.

13. The image display apparatus (100) of any previous claim, wherein the sensing unit senses a third input for moving a highlight in the item list and moves the highlight to change a highlighted item among the plurality of items in response to the third input.

14. The image display apparatus (100) of any previous claim, wherein,
the display unit (120) displays a cursor indicating a position of a user input, and
the control unit (110) moves the cursor from a first point of the item list to a second point of the item list in response to the first input or the second input,
and, optionally, the control unit highlights an item on which the cursor is positioned among the plurality of items.

15. An image display method comprising:
displaying an item list including a plurality of items on a display unit (S910);
sensing a first input for zooming out on the item list or a second input for zooming in on the item list (S920); and
displaying the plurality of items with a decrease in size in response to the first input or displaying the plurality of items with an increase in size in response to the second input (S930).
